# EUROPÄISCHE PATENTSCHRIFT

(11) **EP 0 941 176 B1**
(45) Veröffentlichungstag und Bekanntmachung des Hinweises auf die Patenterteilung: **12.05.2004**
(21) Anmeldenummer: 97952708.2
(22) Anmeldetag: 04.12.1997
(51) Int. Cl.: B60R 5/04

(54) **ABDECKROLLO MIT VEREINFACHTER BEDIENUNG**
EASY-TO-USE ROLLER BLIND
VOLET ROULANT CACHE-BAGAGES A MANIPULATION SIMPLIFIEE

(30) Priorität: 06.12.1996 DE 19650775
(43) Veröffentlichungstag der Anmeldung: 15.09.1999
(73) Patentinhaber: BOS GmbH & Co. KG, 73760 Ostfildern (DE)
(72) Erfinder: AMENT, Eduard, D-73773 Aichwald (DE); SEEL, Holger, D-71134 Aidlingen (DE); WALTER, Herbert, D-73061 Ebersbach (DE)
(74) Vertreter: Patentanwälte Rüger, Barthelt & Abel
(86) Internationale Anmeldenummer: PCT/DE1997/002837
(87) Internationale Veröffentlichungsnummer: WO 1998/024657

(56) Entgegenhaltungen:
- EP-A- 0 668 187
- DE-U- 9 001 816
- US-A- 5 224 748

## Beschreibung

In Kombi-PKW haben zwischenzeitlich Abdeckrollos für den Laderaum eine weite Verbreitung gefunden, denn ohne entsprechende Maßnahmen wäre der Laderaum von außen voll einsehbar. Das Abdeckrollo ist in der Lage, die nach oben weisende Laderaumöffnung, die randseitig von der Rücksitzlehne den beiden Karosserieseitenwänden und der Heckklappe begrenzt ist, gegen Einblick von außen schützen. Andererseits gestatten sie ohne weiteres die Ausnutzung des vollen Volumens des Laderaums einfach indem sie in die Ruhe- oder Aufbewahrungsstellung gebracht werden, in der sie kaum Platz beanspruchen.

Zur Laderaumabdeckung sind grundsätzlich zwei unterschiedliche Systeme bekannt. Das eine System ist nach Art eines Raffrollos ausgestaltet und besteht aus einer Abdeckplane, die in gleichen Abständen mit quer verlaufenden Stangen oder Spriegeln versehen ist. Diese Spriegel laufen in karosserieseitig befestigten Führungsschienen, die zueinander einigermaßen parallel sein müssen. Beim Öffnen sind Zwischenstellungen möglich, jedoch ist der Einbau-aufwand wegen der Schienen hoch.

Das Abdeckrollo mit Spriegeln lässt sich jederzeit in beliebige Zwischenstellungen bringen.

Das andere System, wie es beispielshaft aus der EP 0 668 187 bekannt ist, ist nach der Art eines Springrollos ausgebildet. Es weist ein längliches Gehäuse auf, das hinter der Rückseite der Rücksitzbank zu befestigen ist.

In dem Gehäuse ist eine Wickelwelle drehbar gelagert, an der mit einer Kante eine Rollobahn befestigt ist. Die Rollobahn führt von der Wickelwelle durch einen Auslaufschlitz des Gehäuses nach außen. Die außenliegende Kante der Rollobahn ist mit einem Zugstab versehen, um die Rollobahn betätigen zu können. Mit Hilfe eines Federmotors wird die Wickelwelle in Aufwickelrichtung der Rollobahn vorgespannt. Seitlich neben der Heckklappe befinden sich Haken, in die die Zugstange einzuhängen ist.

Eine Zwischenstellung, in der der Laderaum lediglich halb geöffnet ist, ist mit dem bekannten Abdeckrollo nicht zu erreichen.

In eine Zwischenstellung kann das Rollo gebracht werden, wie es in der US-5,224,748 gezeigt ist. Das Rollo weist zwei miteinander verbundene Endkappen auf, zwischen denen die Wickelwelle drehbar gelagert ist. An der Wickelwelle ist wiederum mit einer Kante die Rollobahn befestigt, deren anderes Ende mit einem Zugstab versehen ist. Mit Hilfe einer Feder wird die Wickelwelle im Sinne eines Aufwickelns der Rollobahn vorgespannt.

Seitlich neben dem Rollobahnweg befinden sich zwei Führungsbahnen, von denen jede zwei Haken trägt. Der eine Haken befindet sich bei der Heckklappenöffnung, während der andere etwa auf der halben Strecke zwischen der Wickelwelle und dem erstgenannten Haken angeordnet ist, um eine halb offene Stellung der Laderaumabdeckung zu ermöglichen. Um jedoch diese Stellung erreichen zu können muss der Benutzer von Hand die Zugstange aus den hinteren Haken aushängen und in die vorderen Haken überführen, wobei er diese Bewegung selbst kontrollieren muss.

Eine weitere Lösung ist in der DE 29 41 711 C2 gezeigt. Die Laderaumabdeckung ist wiederum nach Art eines Springrollos ausgebildet. Sie besteht aus einem länglichen Kassettengehäuse, in dem eine Wickelwelle drehbar gelagert ist. An dieser Wickelwelle ist die Rollobahn befestigt, deren freies Ende mit einem Zugstab verbunden ist. Der Zugstab ist an der Innenseite der Heckklappe eingehängt, und zwar auf einer solchen Höhe, dass bei geschlossener Heckklappe die Rollobahn horizontal über der Laderaumöffnung verläuft.

Mit Hilfe der Befestigung der Zugstange an der Innenseite der Heckklappe soll eine Komfortverbesserung erreicht werden.

Durch die Verbindung mit der Heckklappe wird die Rollobahn automatisch angehoben, wenn die Heckklappe nach oben geschwenkt wird. Dadurch wird die Zugangsöffnung bei offener Heckklappe selbsttätig geöffnet, ohne zusätzliche Handgriffe, wie das Aushängen der Zugstange, zu erfordern.

Ein wesentlicher Nachteil der bekannten Lösung besteht darin, dass beim Öffnen der Heckklappe zwangsläufig die Zugstange mit der Rollobahn aus der Hecköffnung, die durch die Heckklappe zu verschließen ist, herausgezogen und ein Stück weit nach oben bewegt wird. Zufolge des Einzugs im Dachbereich bei modernen Karosserieformen wird die Hecköffnung in Richtung auf das Dach zunehmend schmäler, weshalb bei der bekannten Anordnung die Seiten der Rollobahn an den Rändern der Hecköffnung ansstoßen und scheuern. Die Rollobahn trägt in Kürze in diesem Bereich unschöne Beschädigungen davon.

Bei der bekannten Lösung ist es weiterhin ungünstig, dass der maximale Vorrat an Rollobahn, der auf der Wickelwelle unterzubringen ist, sich nicht aus der Größe der Laderaumöffnung ergibt, sondern aus der Lage der Endstellung der Zugstange bei geöffneter Heckklappe. Diese Menge an Rollobahn ist signifikant größer als das, was lediglich zum Abdecken der Laderaumöffnung benötigt wird.

Ausgehend hiervon ist es Aufgabe der Erfindung, ein Abdeckrollo zu schaffen, das nach Art eines Springrollos ausgebildet und einfach zu handhaben ist, ohne dass beim Öffnen der Heckklappe die Rollobahn beschädigt wird.

Diese Aufgabe wird erfindungsgemäß mit dem Abdeckrollo mit den Merkmalen des Anspruches 1 gelöst.

Die Verwendung einer Zwangsführungseinrichtung mit entsprechender Gestaltung verhindert, dass beim Öffnen der Heckklappe die Zugstange aus der Hecköffnung herausgezogen wird, während andererseits ein verhältnismäßig großer Zugang zu dem Laderaum geschaffen wird. Der Benutzer ist nicht gezwungen, nach dem Öffnen der Heckklappe das Rollo auszuhängen und sich vollständig auf die Wickelwelle aufrollen zu lassen, um Zugang zu dem Laderaum zu bekommen. Vielmehr kann mit Hilfe dieser Form der Zwangsführungseinrichtung die Zugstange in einer Zwischenstellung gehalten werden, womit ein ähnlicher Komfort erzielt wird wie mit Abdeckrollos, die nach dem Raffprinzip und mit in Schienen geführten Spriegeln arbeiten.

Die Rollobahnmenge bemisst sich im Wesentlichen aus der Länge der Laderaumöffnung, gemessen in Richtung parallel zur Längserstreckung des Fahrzeugs.

Selbst wenn die Zwangsführung von Hand betätigt werden muss, ergibt sich noch eine wesentliche Vereinfachung, einfach deshalb, weil zum Erreichen der Zwischenstellung des Rollos sich der Benutzer nicht nach vorne lehnen muss, um den Zugstab bis hin zum Rollogehäuse zu führen. Die Zwangsführungseinrichtung, die lediglich ein Anheben des Zugstabs bewerkstelligt, vermeidet eine unangenehme nach vorne gebeugte Körperhaltung.

Die Zwischenstellung kann unterschiedlich realisiert sein. In einer Zwischenstellung liegt der Zugstab höhenmäßig deutlich über der Schließstellung, während im anderen Falle in der Zwischenstellung die Zugstange lediglich in Richtung auf das Gehäuse zurückversetzt ist.

Insgesamt technisch sehr einfach sind die Verhältnisse, wenn die Zwangsführungseinrichtung die Zugstange auch in der Schließstellung des Rollos hält, so dass ein Umhängen nicht erforderlich ist.

Die Kraft zur Überführung der Zugstange aus der Schließstellung in die Zwischenstellung bzw. zurück kann mit Hilfe von Koppelgliedern erreicht werden, die die Bewegung der Zugstange zumindest über einen Teil ihrer Bewegungsbahn mit der Bewegung der Heckklappe verkoppeln. Diese Koppelglieder können drucksteif und/oder biegeelastisch ausgeführt sein. Wenn lediglich eine Bewegungsrichtung in Frage kommt, genügt es, wenn die Koppelglieder lediglich Zugkräfte übertragen können. Für den Fall, dass die Bewegung, die an dem heckseitigen Ende aufgeprägt wird, größer ist als der Hub an der Zugstange mit der Zwangsführungseinrichtung können die Koppelglieder auch zugelastisch sein.

Die Zwangsführungseinrichtung kann auf unterschiedliche Arten ausgeführt sein. Eine verhältnismäßig einfache Zwangsführungseinrichtung besteht in der Verwendung zweier einarmiger Hebel, die in dem Lade- oder Kofferraum karosserieseitig schwenkbar gelagert sind. Sie weisen von ihrem Scharnierpunkt in Richtung auf die Ladeöffnung und sind am anderen Ende mit Aufnahmeeinrichtungen für die Enden des Zugstabs versehen. Durch Hochschwenken der Hebel, entweder von Hand oder gesteuert durch die Bewegung der Heckklappe, wird die gewünschte große Zugangsöffnung erreicht.

Eine andere Zwangsführungseinrichtung sieht die Verwendung von Führungsschienen vor, die neben den seitlichen Rändern der Laderaumöffnung angebracht sind und in denen Führungsschlitten laufen. Jeder der Führungsschlitten ist mit einer Aufnahmeeinrichtung für den Zugstab versehen, damit auch auf diese Weise der Zugstab, d.h. das ausgezogene Ende der Rollobahn, in eine geeignete Höhe gebracht werden kann, die den Zugang zum Laderaum nicht beeinträchtigt.

Auch bei der Verwendung von Führungsschienen und -schlitten sind die Schlitten zweckmäßigerweise mit der Heckklappe kinematisch verbunden. Die Verbindung mit der Heckklappe hat neben der größeren Bequemlichkeit bei der Bedienung außerdem den technischen Vorteil, eine Synchronbewegung beider Enden des Zugstabs zu erzwingen und Verkantungen zu vermeiden.

Je nachdem, wie die Verbindungs- oder Koppelglieder zwischen der Heckklappe und der Zwangsführungseinrichtung ausgestaltet sind, müssen Federn verwendet werden, um eine Endlage der Zwangsführungseinrichtung zu erzwingen, bzw. es können derartige Federn wegfallen.

Keine Federn werden benötigt, wenn die Koppelglieder zwischen der Heckklappe und der Zwangsführungseinrichtung druck- und biegesteif sind. Hingegen werden Federn benötigt, wenn die Koppelglieder nicht zug- und drucksteif sind. Letzteres kann beispielsweise von Vorteil sein, wenn sich aus bestimmten anderen Gründen kein günstiger Anlenkungspunkt für die Koppelglieder an der Heckklappe finden lässt, damit deren Bewegungshub mit dem Bewegungshub der Zwangsführungseinrichtung übereinstimmt. Wäre der Hub zu klein, könnte z.b. die Zwangsführungseinrichtung durch Federn in die geöffnete Stellung vorgespannt werden und sie wird beim Schließen der Heckklappe gegen die Wirkung dieser Federn in die geschlossene Ruhestellung zurückgezogen.

Sinngemäß die umgekehrte Lösung ist ebenfalls denkbar.

Dabei können die Federn entweder in den Führungsschienen verlaufen oder als Wickelfedern die Hebel vorspannen.

Eine andere Ausführungsform anstatt Koppelglieder zu verwenden, um die Zugstange selbsttätig in die Zwischenstellung zu überführen, besteht in der Ausnutzung der Rückzugskraft, mit der die Rollobahn wieder auf die Wickelwelle aufgewickelt wird. Um dennoch eine gewisse Synchronisation mit der Bewegung bzw. der Stellung der Heckklappe zu erreichen, ist zumindest eine Sperreinrichtung vorgesehen, die mit der Zwangsführungseinrichtung zusammenwirkt. Diese Sperreinrichtung weist insgesamt drei Zustände auf, wobei in dem ersten Zustand eine Bewegung der Zugstange aus einer Schließstellung heraus gesperrt ist. Dies ermöglicht es dem Benutzer, vor dem Schließen der Heckklappe die Zugstange wieder dauerhaft in eine Lage zu bringen, die der Schließstellung des Abdeckrollos entspricht. Die Sperreinrichtung weist außerdem einen zweiten Zustand auf, in dem sich ungehindert die Zugstange aus der Position entsprechend der Schließstellung in die Position entsprechend der Zwischenstellung mit Hilfe der Zwangsführungseinrichtung bewegen kann. Außerdem weist die Sperreinrichtung einen dritten Zustand auf, in dem die Zugstange, abhängig von der Lage der Heckklappe, in der Schließstellung gehalten ist. In diese Lage wird die Zugstange automatisch beim Schließen der Heckklappe überführt.

Sehr einfach werden die kinematischen Verhältnisse, wenn diese drei Zustände der Sperreinrichtung durch wenigstens zwei unterschiedliche Lagen der Zugstange verwirklicht werden. Dabei entspricht der zweite und der dritte Zustand jeweils geringfügig unterschiedlichen Schließstellungen des Abdeckrollos, wobei die Positionen der Zugstange sich dann nur um wenige Millimeter voneinander unterscheiden.

Besonders einfach werden die Verhältnisse, wenn die Zugstange unmittelbar mit der Sperreinrichtung zusammenwirkt, weil dann das Aus- und Einhängen sehr einfach wird.

Eine sehr einfache Sperreinrichtung wird erhalten, indem eine Nut vorgesehen ist, in der das betreffende Ende der Zugstange zwangsgeführt ist. In dieser Nut ist ein taschenförmiger Rücksprung bzw. eine Rastausnehmung enthalten, derart, dass die von der Wickelwelle ausgeübte Zugkraft ein Selbsthalten des Endes der Zugstange in der Tasche bewirkt, wobei diese Position der Zugstange in der Tasche dem ersten Zustand der Sperreinrichtung entspricht.

Um die Zugstange aus der Tasche in die dritte Stellung zu überführen, kann entweder die Tasche mit einer beweglichen Wand versehen sein oder es wird ein entsprechendes Aushebeglied verwendet. Dieses Aushebeglied kann ein Nockenglied sein, das beim Schließen der Heckklappe zwangsläufig die Zugstange aus einer Position entsprechend der dritten Stellung der Sperreinrichtung bewegt.

Damit die Zugstange in der Position entsprechend dem dritten Zustand bleibt, solange bis die Heckklappe geöffnet ist, kann ein Halteglied vorhanden sein, das die Nut entsprechend lange verriegelt.

Dieses Halteglied kann ein Stößel sein, der an der Heckklappe sitzt oder eine über einen Bowdenzug betätigter Schieber oder ein Stößel, der in den Bewegungsweg der Heckklappe ragt.

Im Übrigen sind Weiterbildungen des Gegenstandes der Erfindung Gegenstand von Unteransprüchen.

In der Zeichnung sind Ausführungsbeispiele des Gegenstandes der Erfindung dargestellt. Es zeigen:
Fig. 1 ein erfindungsgemäßes Abdeckrollo in der ausgezogenen hochgeklappten Stellung, in dem Kofferraum eines Personenkraftwagens, in perspektivischer Darstellung bei aufgebrochener Karosserie.
Fig. 2 ein anderes Ausführungsbeispiel des Abdeckrollos mit Schienenführung und starren Koppelgliedern, in einer Darstellung ähnlich Fig. 1,
Fig. 3 eine Draufsicht auf den rechten Rand der Hecköffnung des Ausführungsbeispiels nach Fig.2,
Fig. 4 ein Ausführungsbeispiel des erfindungsgemäßen Abdeckrollos ähnlich dem nach Fig. 2, jedoch mit biegeelastischen Koppelmitteln,
Fig. 5 ein anderes Ausführungsbeispiel des erfindungsgemäßen Abdeckrollos in dem Laderaum eines Personenkraftwagens, und zwar in der Zwischenstellung in perspektivischer Darstellung bei aufgebrochener Karosserie,
Fig. 6 die an einer Seite am Ende der Führungsnut vorhandene Sperreinrichtung des Abdeckrollos nach Fig. 5 in dem ersten Zustand, geschnitten in einer Ebene senkrecht zu der Zugstange,
Fig. 7 die Sperreinrichtung nach Fig. 6, geschnitten entlang einer Linie 7-7 nach Fig. 6,
Fig. 8 die Sperreinrichtung nach Fig. 6 in dem zweiten Zustand, in einer Darstellung entsprechend Fig. 6,
Fig. 9 die Sperreinrichtung nach Fig. 6 im dritten Zustand, in einer Darstellung entsprechend Fig. 6,
Fig. 10 eine andere Ausführungsform einer Sperreinrichtung für die Anordnung nach Fig. 5, in einer Seitenansicht,
Fig. 11 die Anordnung nach Fig. 10, in einer perspektivischen Darstellung,
Fig. 12 ein drittes Ausführungsbeispiel einer Sperreinrichtung für das Abdeckrollo nach Fig. 5, in einer Seitenansicht, teilweise geöffnet und im ersten Zustand,
Fig. 13 das Halteglied der Sperreinrichtung nach Fig. 12 sowie den Betätigungskeil, in einer perspektivischen Explosionsdarstellung,
Fig. 14 die Sperreinrichtung nach Fig. 12 in der dritten Stellung,
Fig. 15 ein Ausführungsbeispiel des erfindungsgemäßen Abdeckrollos mit horizontal geführter Zugstange, in einer perspektivischen Darstellung der Heckpartie des Kraftfahrzeugs,
Fig. 16 eine Sperreinrichtung für das Abdeckrollo nach Fig. 15, in einer Seitenansicht und im ersten Zustand,
Fig. 17 die Sperreinrichtung nach Fig. 16 in dem dritten Zustand und
Fig. 18 die Sperreinrichtung nach Fig. 16 im zweiten Zustand, in einer Darstellung entsprechend Fig. 16.

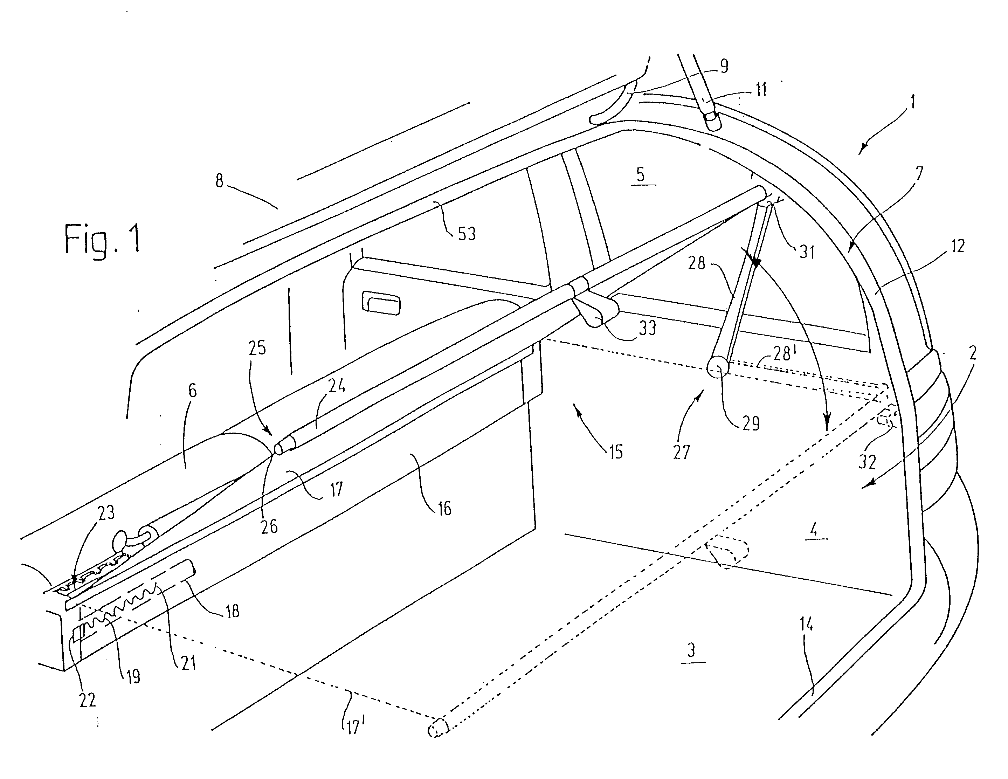

In Fig. 1 ist die aufgebrochen dargestellte Heckpartie 1 eines Kombiwagens oder Personenkraftwagens perspektivisch veranschaulicht, dessen Laderaum 2 von einem Boden 3 sowie zwei Seitenwänden begrenzt ist, von denen nur die rechte Seitenwand 4 erkennbar ist. Über der Seitenwand 4 befindet sich ein hinteres Seitenfenster 5, während den vorderen Abschluss des Laderaums 2 eine Rücksitzlehne 6 einer Rücksitzbank bildet. Das Seitenfenster 5 endet mit seiner Unterkante im Abstand über dem Boden 3.

Der Zugang zu dem Laderaum 2 geschieht über eine Hecköffnung 7, die von einer abgebrochen veranschaulichten Heckklappe 8 wahlweise verschließbar ist. Die Heckklappe 8 ist über Scharnierbänder 9 mit der Karosserie verbunden und kann durch eine Gasdruckfeder 11 in der geöffneten Stellung gehalten werden. Die Hecköffnung 7 wird seitlich von zwei seitlichen Rändern 12 begrenzt, die in dem Maße, in dem es die Karosseriekontur zulässt, zueinander parallel verlaufen. Nach oben und nach unten wird die Hecköffnung 7 durch eine obere, am Dach befindliche Kante 13 und eine Ladebordkante 14, die sich mehr oder weniger dicht über dem Boden 3 befinden, abgeschlossen.

Bei geschlossener Heckklappe 8 entsteht eine nach oben offenen Laderaumöffnung, die randseitig von der Innenseite der Heckklappe 8, den beiden Seitenwänden 4 und der Rückseite der Rücksitzlehne 6 begrenzt ist. Durch diese Laderaumöffnung ist der Laderaum 2 von außen einsehbar.

Um den Laderaum 2 gegenüber Einblicken von außen zu schützen, ist ein Abdeckrollo 15 vorgesehen. Zu diesem gehören ein Gehäuse 16 sowie eine Rollobahn 17 zum Abdecken der Laderaumöffnung.

Das Gehäuse 16 ist ein längliches Gehäuse, das lösbar an der Rückseite der Rücksitzlehne 6 befestigt ist und sich über deren gesamte Länge erstreckt. Im Inneren des Gehäuses 16 befindet sich eine Wickelwelle 18, die endseitig drehbar gelagert ist. Die Länge der Wickelwelle 18 entspricht etwa der Länge des Gehäuses 16.

Die Wickelwelle 18 ist zumindest in einem Abschnitt rohrförmig und enthält darin einen Federmotor 19, der mit einem Ende 21 mit der Wickelwelle 18 verbunden ist und dessen anderes Ende bei 22 im Gehäuse 16 festgelegt ist.

An der Wickelwelle 18 ist mit einer Kante die Rollobahn 17 befestigt, die durch einen länglichen Auslaufschlitz 23 aus dem Gehäuse 16 herausführt. Der Auslaufschlitz 23 geht nahezu über die gesamte Länge des Gehäuses 16 durch und erstreckt sich parallel zu der Wickelwelle 18.

An einer von der Wickelwelle 18 abliegenden Kante ist an der Rollobahn 17 eine Schlaufe 24 ausgebildet, in der ein im Wesentlichen biegesteifer Zugstab 25 steckt, dessen Enden unter Ausbildung von Zapfen 26 endseitig vorstehen.

Zur Führung des Zugstabs 25 und damit zur Führung der Vorderkante der Rollobahn 17 ist eine Zwangsführungseinrichtung 27 vorgesehen. Diese Zwangsführungseinrichtung 27 umfasst zwei einarmige Hebel 28, von denen wegen der abgebrochenen Darstellung der Heckpartie 1 lediglich einer sichtbar ist.

Der Hebel 28 ist mit einem Scharnier 29 an einem seiner Enden an der Seitenwand 4 schwenkbar um eine Horizontalachse gelagert. Die Schwenkachse verläuft parallel zu der Achse der Wickelwelle 18. Das andere Ende des Hebels 28 ist mit einer Aufnahmeeinrichtung 31 versehen, die gabelförmig gestaltet und in der der Zapfen 26 einrastbar ist.

Der nicht sichtbare andere Hebel ist spiegelbildlich auf der anderen Seitenwand gelagert, und zwar koaxial zu dem sichtbaren Hebel 28. Die genaue Lage des Scharniers oder Lagers 29 ergibt sich aus der nachfolgenden Funktionsbeschreibung.

Die Handhabung und Wirkungsweise des beschriebenen Abdeckrollos 15 und der Zwangsführungseinrichtung 27 ist wie folgt:

Bei geöffnetem Laderaum 2 ist in der Ruhestellung die Rollobahn 17 infolge der Wirkung des Federmotors 19 vollständig auf die Wickelwelle 18 aufgewickelt, soweit, bis die durch den Zugstab 25 ausgefüllte Schlaufe 24 von außen her an dem Auslaufschlitz anliegt. Die beiden lose schwenkbaren Hebel 28 liegen in der in der Fig. 1 gestrichelten Position 28', in der sie durch darunter befindliche Anschläge 32 gehalten sind, die an der betreffenden Seitenwand 4 neben der Hecköffnung 7 angebracht sind und den Hebel 28 unterhalb seiner Aufnahmegabel 31 unterstützen.

Wenn der Laderaum 2 nicht mehr einsehbar sein soll, wird die Rollobahn 17 an dem Zugstab 25 gegebenenfalls unter Zuhilfenahme der daran befestigten Schlaufe 33 aus dem Gehäuse 16 gegen die Wirkung des Federmotors 19 herausgezogen. Die Rollobahn 17 wird so weit herausgezogen, bis die beiden Zapfen 26 in die beiden Aufnahmegabeln 31 der beiden Hebel 28 eingehängt werden können. Die Aufnahmegabeln 31 sind in dieser Stellung nach oben offen. Weiters ist die Anordnung so getroffen, dass die jetzt gestrafft gehaltene Rollobahn, die in Fig. 1 in dieser Position gestrichelt veranschaulicht und mit 17' bezeichnet ist, unterhalb des Schwenklagers 29 verläuft. Hierdurch entsteht bei jedem Hebel 28 in der Position 28' ein geringes Drehmoment, das bestrebt ist, den Hebel 28 auf den Anschlag 32 niederzudrücken.

Die ausgebreitete Rollobahn 17' verläuft etwa horizontal knapp unter der Unterkante der Seitenfenster 5 unterhalb der Oberkante der Rücksitzlehne 6.

Wenn jetzt auch noch die Klappe 8 geschlossen wird, ist der Laderaum 2 nicht mehr einsehbar.

Gegebenenfalls weitere Anschlagpuffer, die an der Heckklappe 8 vorgesehen sind, drücken den Zugstab 25 nach unten und damit die Hebel 28 gegen die Anschläge 32, damit sie unter der Wirkung der Erschütterungen beim Fahren weder klappern noch nach oben schnappen können.

Wenn der Laderaum 2 be- oder entladen werden soll, ist nach dem Öffnen der Heckklappe 8 die verbleibende Zugangsöffnung zwischen dem nach unten geschwenkten Zugstab 25 und der Oberkante der Ladebordwand 14 zu klein, um eine bequeme Handhabung zu ermöglichen. Deswegen wird der Zugstab 25 von Hand erfasst und angehoben, wobei er unter der Wirkung der Zwangsführungseinrichtung 27 einen Kreisbogen mit der Achse der Scharniere 29 beschreibt. Die Schwenkbewegung wird durch weitere, z.b. in den Scharnieren 29 vorhandene Anschläge begrenzt. Es sei angenommen, die Endlage entspricht der Lage, wie sie in Fig. 1 mit durchgezogenen Linien veranschaulicht ist.

Die beiden Hebel 28 werden durch die Wirkung des Federmotors 19 in der angehobenen Stellung gehalten, wodurch, wie ersichtlich, die Zugangsöffnung zu dem Laderaum 2 nunmehr deutlich vergrößert und die Rollobahn 17 nicht mehr im Wege ist. Ein Zurücklaufenlassen der Rollobahn 17 in das Gehäuse 16 ist wegen der Zwangsführungseinrichtung 27 nicht mehr erforderlich.

Nach den Stauarbeiten am Laderaum 2 kann das Abdeckrollo 15 wieder in die Abdeckstellung entsprechend den gestrichelten Linien zurückgeklappt werden, einfach indem der Zugstab 25 bzw. die Vorderkante der Rollobahn 17 nach unten bewegt wird, bis die Hebel 28, wie bereits beschrieben, auf den Auflagen 32 aufliegen.

Es ist auch jederzeit möglich, wie bei den bekannten Rollos, die Rollobahn 17 vollständig zu beseitigen. Hierzu wird einfach der Zugstab 25 mit seinen beiden Zapfen 26 aus den Aufnahmen 31 ausgerastet und von Hand in Richtung auf den Auslaufschlitz 23 geführt. Bei dieser Bewegung wickelt der Federmotor 19 die Rollobahn 17 erneut auf der Wickelwelle 18 auf.

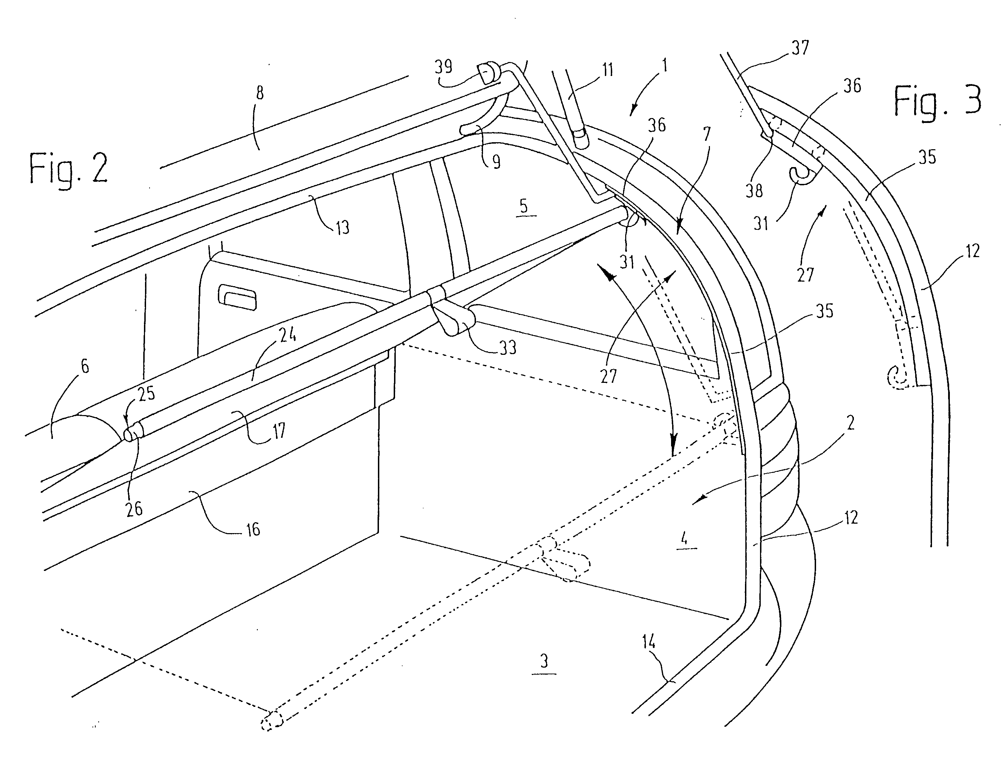

Fig. 2 zeigt eine andere Ausführungsform des erfindungsgemäßen Abdeckrollos 15. Soweit dort Bauelemente verwendet werden, die bereits in Verbindung mit Fig. 1 beschrieben sind und die entweder gleich gestaltet sind oder die gleiche Funktion haben, werden dieselben Bezugszeichen verwendet, ohne eine erneute Erläuterung zu geben.

Der wesentliche Unterschied zu der Ausführungsform nach Fig. 2 besteht darin, dass die Zwangsführungseinrichtung 27, wie die Fig. 2 und 3 erkennen lassen, zwei Führungsschienen 35 umfasst, die innerhalb der Karosserie neben den seitlichen Rändern 12 der Hecköffnung 7 angebracht sind. Dabei ist in den Figuren jeweils wiederum nur eine der beiden Führungsschienen 35 veranschaulicht, da die andere wegen der abgebrochenen Darstellung nicht erkennbar ist.

Die Führungsschienen 35 haben jeweils ein C-förmiges Profil und eine Gestalt, die darin schematisch angedeutete Führungsschlitten 36 laufen lässt. Jeder Führungsschlitten 36 trägt an seinem unteren Ende die bereits erwähnte gabelförmige Aufnahmeeinrichtung 31, in die das zapfenförmige Ende 26 des Zugstabs 25 einzuhängen ist.

Außerdem ist jeder Schlitten 36 über eine Verbindungsstange 37 kinematisch mit der Heckklappe 8 verbunden. Die Verbindungsstange 37 ist bei 38 drehbar mit dem Schlitten 36 verbunden und bei 39 an der Heckklappe 8 in der Nähe von deren Scharnier anscharniert.

Die Stange 37 ist druck- und biegesteif und erzwingt damit bei der Öffnungs- und Schließbewegung der Heckklappe 8 eine Bewegung der beiden Schlitten 36 längs ihrer zugehörigen Schienen 35.

Im Grunde genommen ist die Handhabung des Abdeckrollos nach den Fig. 2 und 3 die gleiche wie die Handhabung bei dem Ausführungsbeispiel nach Fig. 1:

Wenn der Laderaum 2 verschlossen werden soll, wird die Zugstange 25 mit ihren beiden zapfenförmigen Enden 26 in die beiden Schlitten 36 eingehängt. Diese beiden Schlitten 36 befinden sich bei geöffneter Heckklappe 8 in ihrer oberen Position und halten somit auch die eingehängte Zugstange 25 in einer angehobenen Position, die höher liegt als die Position, die sie einnimmt, wenn der Laderaum 2 verschlossen ist.

Ausgehend von der in Fig. 2 mit durchgezogenen Linien gezeigte Stellung, in der die Heckklappe 8 heruntergeschwenkt wird, drücken die beiden Stangen 37 zwangsläufig auch die Schlitten 36 in den Führungsschienen 35 nach unten. Bei vollständig geschlossener Heckklappe 8 verläuft die Rollobahn 17 etwa horizontal, wie dies in Fig. 2 mit gestrichelten Linien dargestellt ist.

Beim Öffnen der Heckklappe 8 werden die Schlitten 36 wiederum nach oben gezogen und heben damit auch die Rollobahn 17 an.

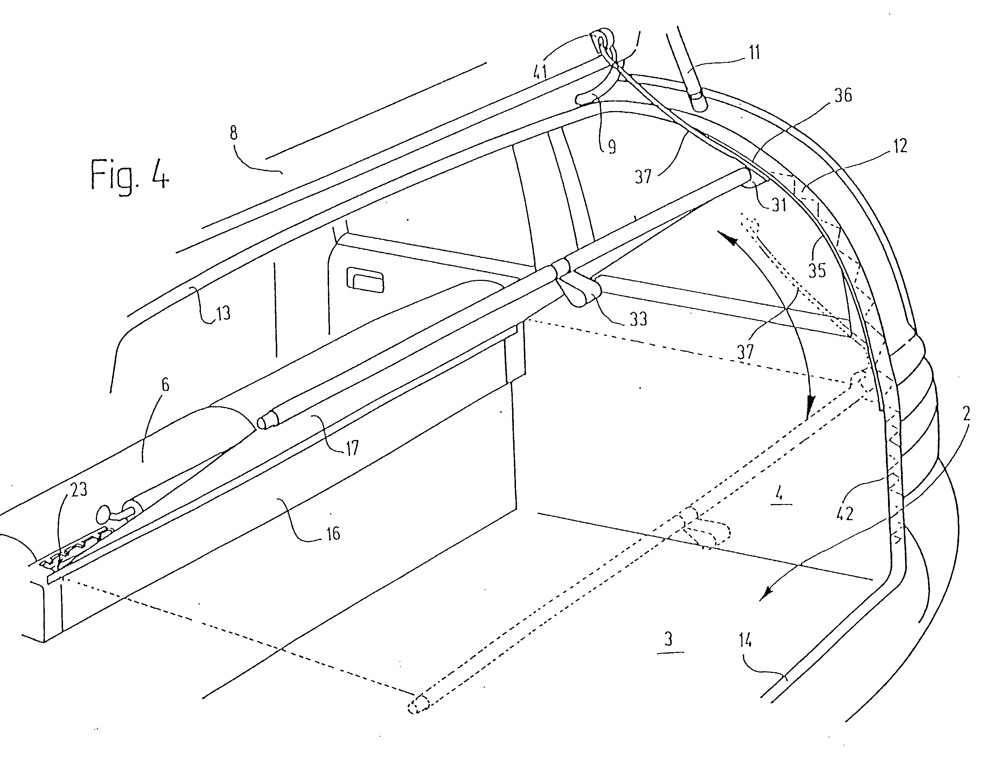

Fig. 4 zeigt schließlich, dass es möglich ist, anstelle von druck- und biegesteifen Koppelgliedern auch schnurähnliche Koppelglieder 37 zu verwenden, die an einer Öse 41 angeknotet sind, die sich auf der Innenseite der Heckklappe 8 befinden.

Da ein derartiges Koppelglied 37 lediglich in einer Richtung den zugehörigen Schlitten 36 bewegen kann, ist für die gegenläufige Bewegung eine Vorspannfeder 42 vorgesehen, die in der betreffenden Führungsschiene verläuft und den jeweiligen Schlitten 36 entgegen der Wirkung des Koppelgliedes 37 vorspannt. Bei der gezeigten Ausführungsform verläuft die Feder als Zugfeder von dem Schlitten 36 zu dem unteren Ende der Führungsschiene 35, d.h. die Schlitten 36 werden durch ihre Federn 42 ständig in eine Stellung entsprechend dem geschlossenen Abdeckrollo vorgespannt. Beim Schließen der Heckklappe 8 laufen unter der Wirkung der Federn die Schlitten 36 nach unten, während sie beim Öffnen der Heckklappe 8 gegen die Wirkung der Federn nach oben gezogen werden. Im Übrigen ist die Handhabung und die Funktionsweise die gleiche, wie dies in Verbindung mit den vorherigen Ausführungsbeispielen bereits erläutert wurde.

Obwohl nicht im Einzelnen dargestellt, können die Koppelglieder 37 auch bei einer Zwangsführugnseinrichtung 27 mit Hebeln vorgesehen werden und umgekehrt sind auch Ausführungsformen möglich, bei denen die Zwangsführungseinrichtung 27 Schienen aufweist, jedoch keine Koppelglieder 37. Dennoch hat die Verwendung von Koppelgliedern 37 den wesentlichen technischen Vorteil, dass zwangsläufig über die Heckklappe 8 gesteuert, beide Enden des Zugstabs 25 synchron bewegt werden und keine Verkantungen auftreten können.

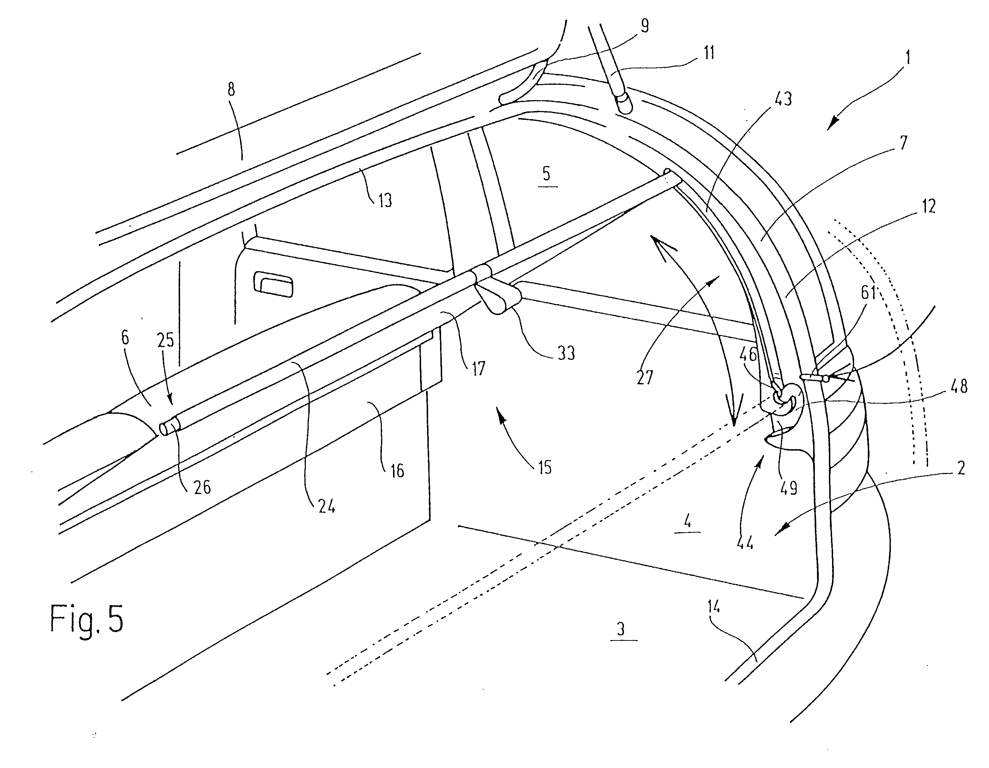

In Fig. 5 ist ein weiteres Ausführungsbeispiel gezeigt, bei dem wiederkehrende Bauelemente und Komponenten, die baugleich oder funktionsgleich sind, mit denselben Bezugszeichen versehen sind wie bei dem vorherigen Ausführungsbeispiel, ohne dass eine erneute detaillierte Erläuterung gegeben wird.

Das Ausführungsbeispiel nach Fig. 5 weist als Zwangsführungseinrichtung 27 zwei Nuten 43 auf, von denen wegen der abgebrochenen perspektivischen Darstellung lediglich die eine erkennbar ist. Diese im Querschnitt rechteckige Nut 43 verläuft, beginnend etwa bei der Brüstung des Fahrzeugs, in dem seitlichen Rand 12 der Hecköffnung 7 in Richtung auf die am Dach befindliche Kante. Die Nut 43 endet jedoch ein beträchtliches Stück davor. Ihre Weite entspricht dem Durchmesser des Zapfens 26. Ihr in der Nähe des Dachs liegendes Ende ist geschlossen.

In dem nicht sichtbaren seitlichen Rand 12 auf der anderen Seite der Hecköffnung 7 befindet sich eine spiegelbildliche Nut 43. Beide Nuten 43 öffnen sich zueinander und folgen der Kontur der Heckpartie, beginnend ab der Brüstung in Richtung zum Dach. Zufolge dieser Ausgestaltung ist der Abstand des unteren Endes der Nut 43 von dem Rollogehäuse 16 größer als der Abstand des oberen Endes, d.h. wenn sich der Zapfen 26, ausgehend von der Brüstung, durch die Nut 43 in Richtung zu deren dachseitigem Ende bewegt, wird die Rollobahn 17 ein Stück weit eingefahren.

Wegen dieser Anordnung ist das Abdeckrollo 15 ständig bestrebt, die in Fig. 5 gezeigte Stellung einzunehmen. Um dennoch die Laderaumöffnung vor dem Schließen der Heckklappe 8 abdecken zu können, ist am unteren Ende der Nut 43 eine Sperreinrichtung 44 vorgesehen. Die in Fig. 5 erkennbare Sperreinrichtung 44 ist spiegelbildlich auch auf der linken Fahrzeugseite vorhanden. Die Erläuterung des Aufbaus und der Wirkungsweise der Sperreinrichtung 44 kann sich deswegen auf die eine der beiden Sperreinrichtungen beschränken.

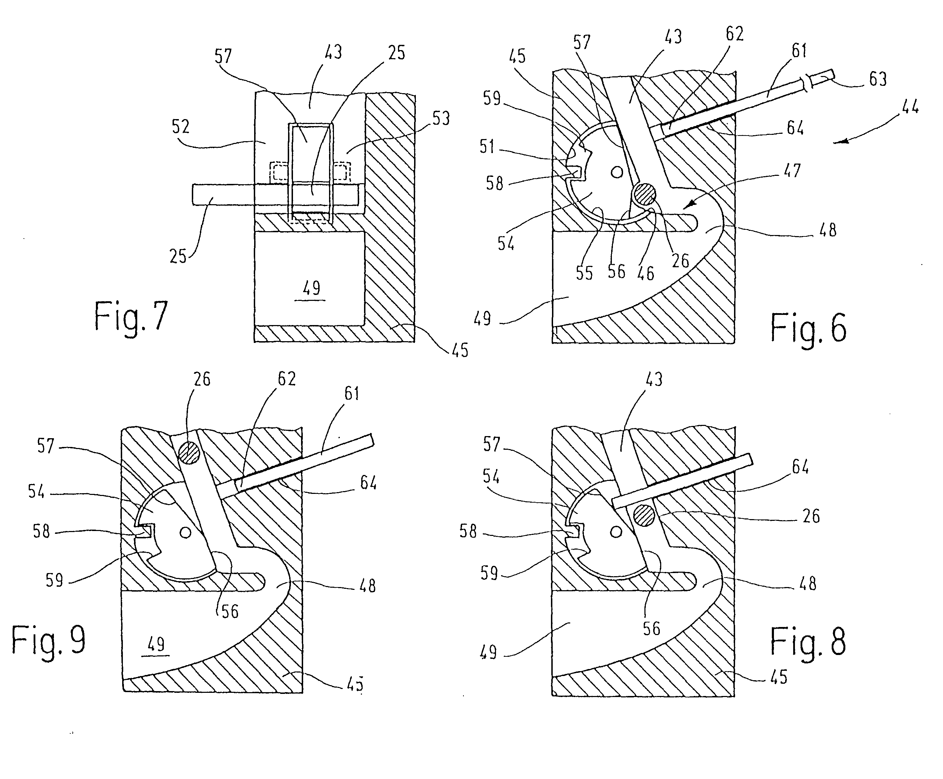

Die Fig. 6 bis 8 zeigen die Sperreinrichtung 44 in schematischer Weise. Wie den Figuren zu entnehmen ist, verläuft die Nut 43 im Bereich der Sperreinrichtung 44 durch ein aufgeschnitten gezeigtes Gehäuse 45. An ihrem unteren Ende bildet die Nut 43 in ihrer nach vorne liegenden Seitenwand eine sich in Richtung auf die Wickelwelle 18 zu wölbende Tasche oder Rastausnehmung 46 und mündet außerdem in eine weitere Einführungsnut 47 ein, die, auf der Höhe der Tasche 46, zunächst horizontal in Richtung auf die nicht erkennbare Hecköffnung 7 führt. Nach einem kurzen Stück bildet die Einführungsnut 47 einen nach unten weisenden 180°-Bogen 48, in dessen Anschluss sich die Einführungsnut 47 bei 49 trichterartig erweitert und einen Einfädelungstrichter bildet.

Auf der von der Hecköffnung abliegenden Seite ist in dem Gehäusekörper 45 eine teilzylindrische Ausnehmung 51 enthalten, die die vordere Seitenwand (in der Figur die linke) der Nut 43 anschneidet, wie dies Fig. 7 erkennen lässt, d.h. beidseits der Ausnehmung 51 sind Nutwandabschnitte 52 und 53 stehen geblieben, die sich in die Tasche 46 fortsetzen. In der teilzylindrischen Ausnehmung 51 befindet sich ein Aushebeglied 54 in Form einer etwa sektorförmigen Scheibe, die in der Ausnehmung 51 begrenzt schwenkbar enthalten ist. Das Aushebeglied 54 wird von einer zylindrischen Außenfläche 55, die den gleichen Durchmesser wie die teilzylindrische Ausnehmung 51 hat, sowie zwei als Sehnen verlaufende Geradflächen 56 und 57 begrenzt. Die Flächen 56 und 57 sind der Nut 43 zugekehrt. Das Aushebeglied 54 ist um eine Achse schwenkbar, die parallel zu der benachbarten Seitenwand der Nut 43 und sich horizontal erstreckt.

Die Schwenkbegrenzung des Aushebeglieds 54 wird mit Hilfe einer in die Ausnehmung 51 ragenden Rippe 58 erreicht, die mit einer bogenförmigen Ausnehmung 59 in der zylindrischen Fläche 55 zusammenwirkt.

Ferner ist in dem Gehäuse 45 ein Stößel 61 verschieblich gelagert, dessen innenliegendes Ende 62 zu der Nut 43 zeigt und dessen außenliegendes Ende 63 in den Bewegungsweg der Heckklappe 8 auf der Höhe der Brüstung ragt. Der Stößel 61 bildet gleichzeitig ein Halteglied und er ist in einer Bohrung 64 verschieblich gelagert, deren Achse auf die zylindrische Ausnehmung 51 zeigt, und zwar oberhalb der Schwenkachse des Aushebeglieds 54.

Die Wirkungsweise des Abdeckrollos 15 nach Fig. 5 ist wie folgt:

Als Ausgangsstellung sei angenommen, dass sich das Abdeckrollo 15 in der in Fig. 5 gezeigten Stellung befindet. In dieser Stellung liegen die Zapfen 26 der Zugstange 25 am dachseitig geschlossenen Ende der Nut 43 an. Hier werden sie durch die Rückzugskraft des Federmotors 19 der Wickelwelle 18 in Anlage gehalten.

Um die Laderaumöffnung vor dem Schließen der Heckklappe 8 abzudecken, drückt der Benutzer mit den Händen die durch die Zugstange 25 ausgesteifte Kante der Rollobahn 17 nach unten. Dabei gleiten die Zapfen 26 durch die seitlichen Nuten 43 der Zwangsführungseinrichtung 27, bis sie deren unteres Ende erreichen. Wiederum zufolge des Federmotors 19 werden umgehend nach dem Erreichen des unteren Endes der Führungsnuten 43 die beiden Zapfen 26 in die Rastausnehmungen 46 gezogen, wobei gleichzeitig das scheibenförmige Aushebeglied 54 in die Stellung nach Fig. 6 gedreht wird, in der dessen Fläche 56 gegenüber dem Lichtraumprofil der Rastausnehmung 46 zurückspringt. Auf jeder Seite der Hecköffnung 7 ist somit der betreffende Zapfen 26 in der Rastausnehmung 46 verrastet. Der Federmotor 19 hält die Rollobahn 17 gestrafft, kann aber die Rollobahn 17 nicht wieder in die Stellung nach Fig. 5 zurückziehen, weil die Zapfen 26 in den Rastausnehmungen 46 verrastet sind. Das Abdeckrollo 15 befindet sich in seiner Schließstellung.

Der Benutzer kann nun die Heckklappe 8 nach unten schwenken und dadurch die Hecköffnung 7 verschließen. Gegen Ende der Schließbewegung wird die Klappe 8 mit den außenliegenden Enden 63 der beiden Stößel 61 in Berührung kommen, so dass die weitere Schließbewegung der Heckklappe 8 die Stößel 61 nach vorne in Richtung auf das scheibenförmige Aushebeglied 54 bewegt. Dadurch wird, wie Fig. 8 zeigt, das innenliegende Ende 62 veranlasst, in die Nut 43 einzutreten, diese zu überqueren und in die dahinter liegende Ausnehmung 51 ein Stück weit einzudringen. Zufolge des Eindringens in die Ausnehmung 51 wird der Stößel mit der Fläche 57 in Anlage kommen und das scheibenförmige Aushebeglied 54 um seine horizontal verlaufende Achse drehen. Dadurch drückt das scheibenförmige Aushebeglied mit der unteren Fläche 56 den Zapfen 26 entgegen der Wirkung des Federmotors 19 aus der Tasche 46 heraus. Die Rückzugskraft des Federmotors 19 bewirkt nun, dass der Zapfen 26 auf der schräg verlaufenden Fläche 56 auf der betreffenden, ebenfalls schräg verlaufenden Nutseitenwand nach oben gleiten kann, bis er von unten her gegen den Stößel 61 anstößt. In dieser Stellung befindet sich der Zapfen 26 oberhalb der Stellung nach Fig. 6, und zwar so weit, dass er ohne Druck von oben auf die Zugstange 25 nicht mehr zurück in die Tasche 46 gelangen kann. Das Abdeckrollo 15 befindet sich immer noch in der Schließstellung.

Wenn der Benutzer jetzt das nächste Mal die Heckklappe 8 öffnet, wird der Stößel 61 durch eine nicht gezeigte Rückholfeder aus der Stellung nach Fig. 8 zurück in die Stellung nach Fig. 6 gezogen, die auch mit der Stellung nach Fig. 9 identisch ist. Während dieser Bewegung verlässt der Stößel 61, der zuvor als Halteglied für den Zapfen 26 gewirkt hat, das Lichtraumprofil der Nut 43, womit der Zapfen 26 unter der Wirkung der Rückzugskraft des Federmotors 19 in der Nut 43 zu deren oberem dachseitigem Ende gleiten kann.

Damit die Bewegung nicht schlagartig erfolgt, d.h. die Kante der Rollobahn 17 nicht nach oben springt, ist vorteilhafterweise eine Bremseinrichtung vorhanden, die beispielsweise in Form einer Viskosebremse ausgeführt sein kann, die mit der Wickelwelle 18 zusammenwirkt.

Wie sich aus der obigen Funktionsbeschreibung ergibt, weist die Sperreinrichtung 44 insgesamt drei Zustände auf. In dem ersten Zustand, wie er in Fig. 6 gezeigt ist, ist der betreffende Zapfen 26 in der Rastausnehmung 46 zuverlässig verrastet und die Rollobahn 17 ist in der Schließstellung fixiert. Der zweite Zustand der Sperreinrichtung ist in Fig. 9 veranschaulicht und entspricht der vollständigen Freigabe des Zapfens 26, der sich ungehindert in der Nut 43 nach oben bewegen kann. Der dritte Zustand, wie in Fig. 8 repräsentiert, ist ein Zwischenzustand zwischen den Zuständen nach den Fig. 6 und 9 und entspricht einem "Vorbereitungszustand", in dem das Abdeckrollo 15 auf ein erneutes Öffnen der Heckklappe 8 wartet, um in die Stellung nach Fig. 5 gelangen zu können. In dem ersten und dem dritten Zustand gemäß den Fig. 6 und 8 unterscheidet sich die Lage des Zapfens 26 und damit der Zugstange 25 räumlich um wenige Millimeter. In beiden Stellungen handelt es sich jedoch um eine Schließstellung, in der die Laderaumöffnung nahezu vollständig verschlossen ist. Hingegen ist die Stellung nach Fig. 5 eine Zwischenstellung, in der die dem Benutzer zugekehrte Kante, gebildet durch die Schlaufe 24, deutlich bis fast zum Dach hin angehoben ist, so dass die Laderaumöffnung von oben her gut zugänglich ist.

Wenn der Benutzer die Laderaumöffnung vollständig öffnen oder er die Laderaumabdeckung 15 entnehmen will, drückt er zunächst die ihm zugekehrte Kante, gebildet durch die Schlaufe 24, nach unten, so weit, bis wieder die Zapfen 26 in den zugehörigen Taschen 46 einrasten. Er kann nun an der Schlaufe 33 oder, indem er die schlauchförmige Schlaufe 24 erfasst, die Rollobahn 17 auf sich zu ziehen, wodurch der Zapfen 26 aus der Tasche 46 in die Einführungsnut 47 gelangt. Die weitere Bewegung nach unten bringt den Zapfen 26 in den Einfädelungstrichter 49, aus dem heraus der Zapfen 26 die Sperreinrichtung 44 vollständig verlässt, so dass die Zugstange 25 bis hin zu dem Gehäuse 16 auf einem beliebigen Weg zurückgeführt werden kann.

Das Einhängen der Zapfen 26 geschieht sinngemäß in umgekehrter Weise, indem diese an beiden Seiten in die Einführungstrichter 49 eingefädelt und nach oben in die Stellung nach Fig. 6 gebracht werden.

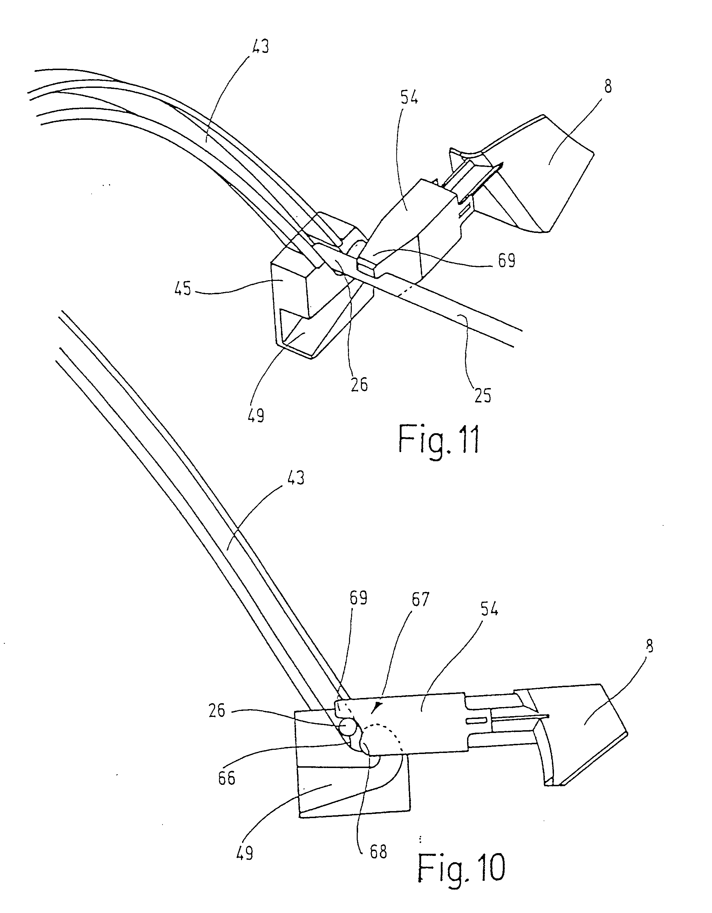

Die Fig. 10 und 11 zeigen in einer Seiten- bzw. perspektivischen Ansicht eine Ausführungsform der Sperreinrichtung 44, die sich von der zuvor beschriebenen Ausführungsform dadurch unterscheidet, dass die Tasche mit einer beweglichen Wand in Gestalt eines Rastschiebers 66 ausgeführt ist, der von der Rückseite her in den Raum der Nut 43 hineinragt, und zwar oberhalb der Einführungsnut 47.

An der Innenseite der Heckklappe sitzt das Aushebeglied 54, das hier nicht die Gestalt einer drehbaren Scheibe, sondern eines starren Armes hat, der an der Innenseite der Heckklappe befestigt ist. Das Aushebeglied 54 trägt an seinem von der Heckklappe 8 abgewandten Stirnende 67 einen Rücksprung 68, der darüber in eine Haltenase 69 übergeht.

Die Funktionsweise ist wie folgt:

Wenn der Benutzer das Abdeckrollo 15 in die Schließstellung bringt, bewegen sich auf beiden Seiten die Zapfen 26 zu der betreffenden Sperreinrichtung 44, in der sie den Rastschieber 66 zurückdrücken und darunter gelangen. Dadurch wird der betreffende Zapfen 26 unterhalb des Rastschiebers 66 verrastet, wie dies Fig. 11 erkennen lässt. Wenn nun die Heckklappe 8 geschlossen wird, kommt das Aushebeglied 54 mit seiner Stirnseite 68 mit dem Zapfen 26 in Eingriff und drückt den Zapfen 26 unter gleichzeitigem Zurückdrängen des Rastschiebers 66 aus dem Lichtraumprofil der Nut 43 zurück, so dass der Zapfen 26, wie in Fig. 10 erkennbar, über den Rastschieber 66 gelangen kann. Da sich jedoch die Nase 69 in den Bewegungsweg des Zapfens 26 erstreckt, bleibt der Zapfen 26 bei geschlossener Heckklappe 8 unter der Nase 69 hängen. Erst ein erneutes Öffnen der Heckklappe 8 gibt den Zapfen 26 auf der jeweiligen Seite frei, damit er durch die Nut 43 nach oben zu deren oberem dachseitigem Ende gleiten kann.

Während die in Fig. 11 gezeigte Stellung dem ersten Zustand gemäß der vorherigen Definition entspricht, zeigt Fig. 10 den dritten Zustand.

Die Einführungsnut 47 und der Einfädelungstrichter 49 sind in gleicher Weise vorhanden.

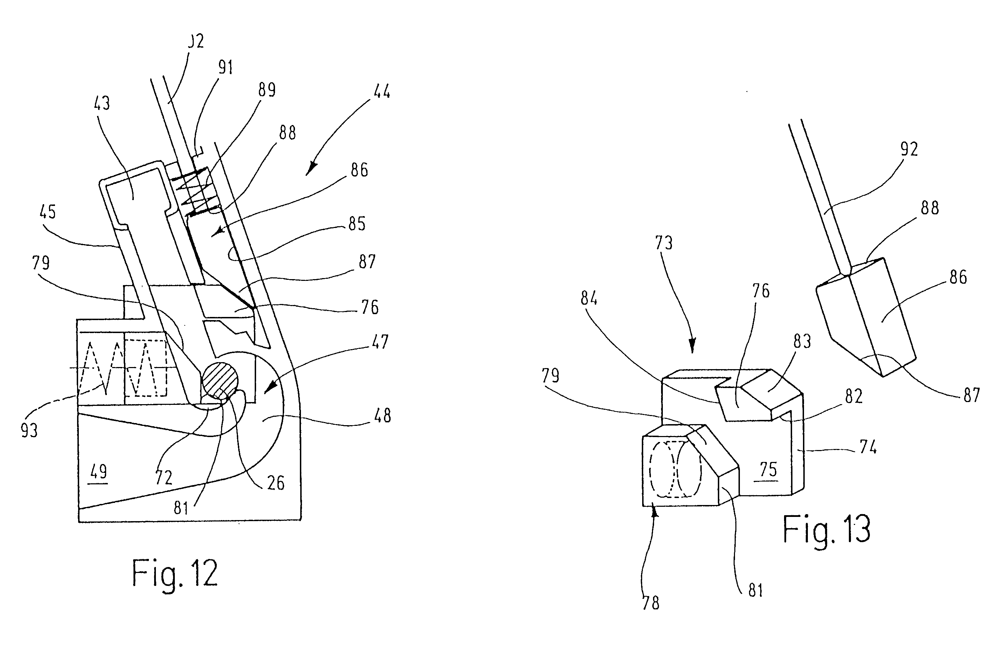

Bei den Ausführungsbeispielen nach den Fig. 6 bis 11 erfolgt die Betätigung der Sperreinrichtung 44 gegen Ende der Schließbewegung der Heckklappe 8. Wenn dies am Anfang der Schließbewegung, d.h. umgekehrt am Ende der Öffnungsbewegung erfolgen soll, kommt eine Lösung nach den Fig. 12 bis 14 in Betracht.

Dabei ähnelt diese Konstruktion der Konstruktion nach den Fig. 6 bis 9.

In dem Gehäuse 45 kommt von oben her die Führungsnut 43 der Zwangsführungseinrichtung 25. Die Einführungsnut 47 verläuft an ihrem Anfang dort, wo sie mit der Nut 43 zusammenstößt, nicht horizontal, sondern sie steigt geringfügig nach oben an, so dass sich bei 72 eine Mulde ergibt.

Anstelle des scheibenförmigen Aushebeglieds 54 ist in einer entsprechenden Öffnung des Gehäuses 45 ein in Fig. 13 perspektivisch gezeichneter plattenförmiger Schieber 73 horizontal geführt. Die Darstellung zeigt die Einbaulage im Fahrzeug.

Der Schieber 73 besteht aus einer Grundplatte 74, auf deren Vorderseite 75 zwei in der gleichen Richtung zeigende Fortsätze 76 und 78 angeformt sind. Der Fortsatz 78 trägt eine Schrägfläche 79, die nach unten in eine vertikal verlaufende ebene Fläche 81 übergeht. Diese beiden Flächen 79 und 81 sind die Funktionsflächen des Fortsatzes 78.

Die wesentlichen Flächen des Fortsatzes 76 sind eine horizontal verlaufende ebene Fläche 82 an der Unterseite des Fortsatzes 76, bezogen auf die Darstellung in Fig. 13, sowie eine Schrägfläche 83, die schräg nach oben zeigt. Ferner wird der Fortsatz 76 umfangsseitig von einer Fläche 84 begrenzt.

Die genaue Lage und Wirkung der einzelnen Flächen ergibt sich aus der weiter unten angegebenen Funktionsbeschreibung.

Parallel zu der Nut 43 verläuft in dem Gehäusekörper 45 eine Nut 85, die zu der Hecköffnung 7 hin gegenüber der Nut 43 versetzt ist. In der Nut 85 ist ein Betätigungskeil 86 mit einer Keilfläche 87 an seinem vorderen Ende längsverschieblich geführt ist. An einer hinteren Stirnfläche 88 stützt sich eine kräftige Schraubendruckfeder 89 ab, die anderenends bei 91 in dem Gehäuse 45 abgestützt ist. Außerdem mündet in die Rückseite 88 des Betätigungskeils 86 ein biegeelastisches zugfestes zylindrisches Koppelglied 92, das an seinem anderen nicht gezeigten Ende mit einer entsprechenden Nocken- oder Keilfläche zusammenwirkt, die mit der Heckklappe 8 gekoppelt ist.

Bei vollständig geöffneter Heckklappe 8 wird der Betätigungskeil 86 entgegen der Wirkung der Schraubendruckfeder 89, die sich an der Schulter 91 abstützt, zurückgezogen. Dadurch ist es dem Schieber 73 möglich, mit Hilfe einer Druckfeder 93 nach vorne geschoben zu werden. In dieser Stellung ragt der Fortsatz 78 mit seiner Schrägfläche 79 in die Nut 43 hinein. Die vertikal verlaufende Fläche 81 befindet sich mittig in der Nut 43 und etwa vor dem Beginn der Einführungsnut 47. Gleichzeitig ist in dieser Stellung der Fortsatz 76 aus dem Lichtraumprofil der Nut 43 verschwunden, soweit, dass seine Seitenfläche 84 mit der betreffenden Wand der Nut 43 bündig ist.

Beim Schließen des Abdeckrollos 15 kann der Zapfen 26 von oben her kommend in die Sperreinrichtung 44 gelangen, wobei er zunächst den unwirksamen Fortsatz 83 passiert und etwas weiter unten auf die in die Nut 43 ragende Schrägfläche 79 trifft. Indem die Zugstange 25 vom Benutzer mit Kraft weiter nach unten gedrückt wird, wird der Schieber 73 zufolge des Einwirkens des Zapfens 26 auf die Schrägfläche 79 gegen die Wirkung der ihn vorspannenden Druckfeder 93 zurückgeschoben, so dass der in das Lichtraumprofil der Nut 43 ragende Bereich des Fortsatzes 78 aus dem Lichtraumprofil verschwindet.

Damit dies ohne weiteres geschehen kann, springt die Fläche 79 in der in Fig. 12 gezeigten Ruhestellung gegenüber der betreffenden Seitenwand der Nut 43 zurück, weshalb die zurückrückende Wirkung für den Schieber 73 dadurch zustandekommt, dass der Zapfen 26 zwischen der Fläche 79 und der gegenüberliegenden Seitenwand der Nut 43 eingeklemmt wird.

Am Ende der Bewegung nach unten gelangt der Zapfen 26 in die Einführungsnut 47 und damit vor das untere Ende der Nut 43. Der Schieber 73 kann jetzt von der Schraubendruckfeder 93 in Richtung auf die Hecköffnung 2 vorgeschoben werden. Die Kraft, die die Schraubendruckfedern 93 auf beiden Seiten der Hecköffnung 2 ausüben können, ist zumindest gemeinsam größer als die Rückzugskraft, die der Federmotor 19 aufzubringen vermag. Der Zapfen 26 ist somit zwischen der Fläche 81 und den Wänden der Einführungsnut 47 gefesselt, wie dies Fig. 12 erkennen lässt.

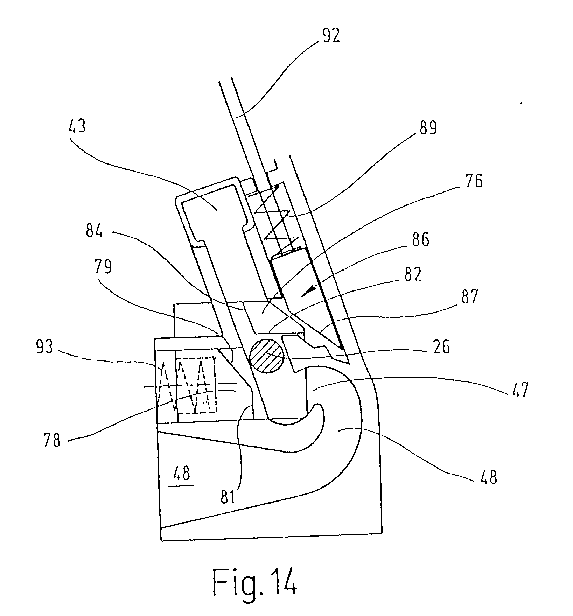

Wenn der Benutzer die Heckklappe 8 zu schließen beginnt, hört die Zugwirkung an dem drahtförmigen Koppelglied 92 bald nach Verlassen der höchsten Öffnungsstellung der Heckklappe 8 auf und die Druckfeder 89 ist in der Lage, den Betätigungskeil 86 nach unten zu drücken. Dadurch kommt die Keilfläche 87 mit der Schrägfläche 83 in Berührung und aufgrund des so entstehenden Keilgetriebes kann die Kraft der Druckfeder 89 den Schieber 73 gegen die Wirkung der Schraubendruckfeder 93 verschieben, wodurch der Fortsatz 78 aus dem Lichtraumprofil der Nut 43 zurückgedrängt wird. Gleichzeitig dringt aber der weiter oben an der Grundplatte 75 sitzende Fortsatz 76 in das Lichtraumprofil ein, wie dies Fig. 14 zeigt. Der Zapfen 26 kommt zufolge der Bewegung des Schiebers 73 zwar aus der Einfädelnut 47 frei und gelangt in die schräg nach oben aufsteigende Nut 43, bleibt aber nach einem kurzen Stück seines Bewegungsweges an der Unterseite 82 des Fortsatzes 76 hängen. Hier verbleibt der Zapfen 26, solange bis durch Öffnen der Heckklappe 8 der Betätigungskeil 86 aus der Stellung nach Fig. 14 wieder zurück in die Stellung nach Fig. 12 zurückgezogen wird und die Feder 93 den Schieber 73 zurückdrücken kann.

Diese Bewegung findet erst am Ende der Öffnungsbewegung der Heckklappe 8 statt. Wenn der Benutzer die Heckklappe 8 lediglich bis zur Hälfte öffnet, würde das Abdeckrollo 15 in der Schließstellung verbleiben.

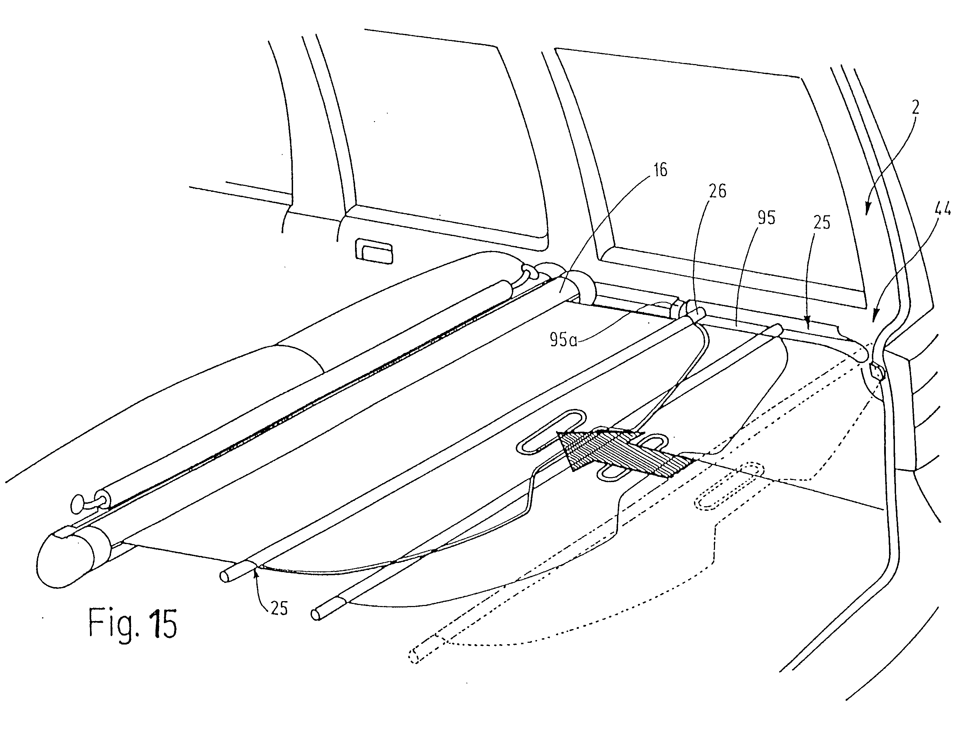

Während die Zwangsführungseinrichtung bei den Ausführungsbeispielen nach den Fig. 5 bis 14 eine vollständig geschlossene Nut ist, wird die Zwangsführungseinrichtung 27 bei dem Ausführungsbeispiel nach Fig. 15 von einer horizontal verlaufenden geraden Schulter 95 gebildet, die bei dem Gehäuse 16 beginnt und bis zu der Hecköffnung 2 geht. Auf dieser nach oben zeigenden Schulterfläche 95 gleitet der Zapfen 26 der Zugstange 25. Die Zwischenstellung wird mit Hilfe eines Anschlags 95a erreicht, der sich an der entsprechenden Stelle nach oben von der Schulter 95 erhebt und beim automatischen Rücklauf der Rollobahn 17 die betreffenden Zapfen 26 aufhält.

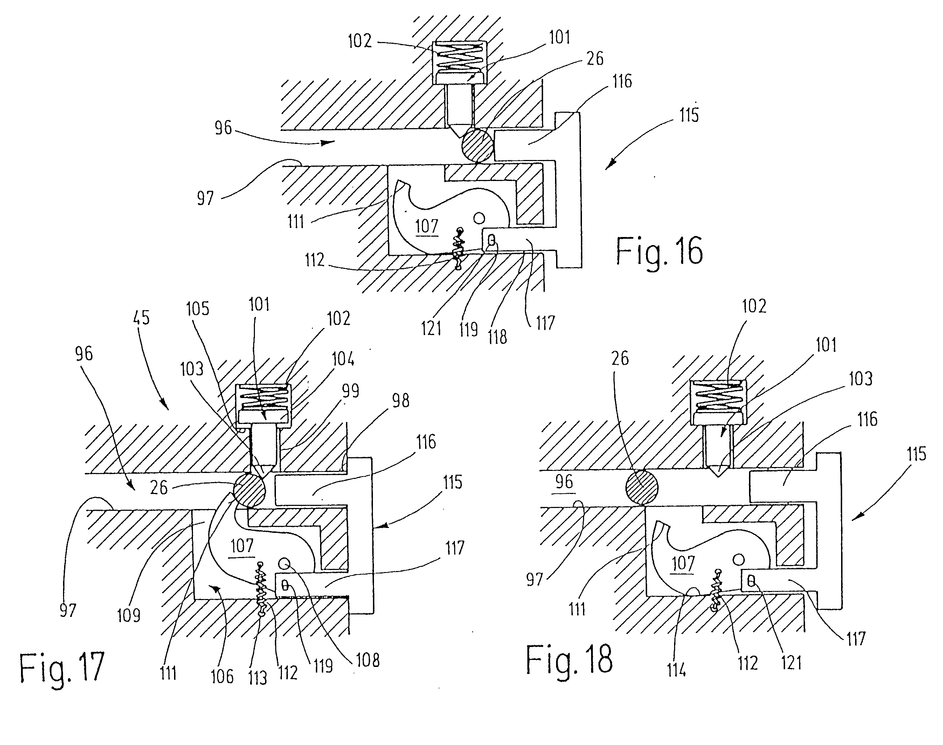

Am Ende der Schulter 95, d.h. in der Nähe der Hecköffnung 2, befindet sich wiederum eine Sperreinrichtung 44, deren Aufbau in den Fig. 16 bis 18 in unterschiedlichen Betriebsstellungen veranschaulicht ist.

Die Schulter 95 läuft an ihrem heckseitigen Ende wiederum in das Gehäuse 45 ein, in dem die Schulter 95 in eine Nut 96 übergeht, und zwar so, dass eine untere Nutenwand 97 mit der Schulter 95 fluchtet. Die Nut 96 öffnet sich in Richtung auf die gegenüberliegende Seitenwand des Fahrzeugs und sie läuft bis nahezu zur Hecköffnung 7 durch. Dort tritt sie bei 98 aus dem Gehäuse 45 aus.

In der Nähe des Endes 98 mündet eine Bohrung 99 mit einem darin geführten Rastbolzen 101, der durch eine Druckfeder 102 in Richtung auf die Nut 96 vorgespannt ist, so dass seine Spitze 103 ein Stück weit in das Lichtraumprofil der Nut 96 ragen kann. Die Vorschubbewegung begrenzt ein flacher Kopf 104, der sich auf eine entsprechende Schulter 105 in dem Gehäuse 45 auflegt.

Unterhalb der Nut 96 befindet sich in einer Kammer 106 ein schwenkbar gelagertes Halteglied 107, das um eine Achse 108 drehbar ist. Die Kammer 106 steht über eine Öffnung 109 mit der Nut 96 in Verbindung, und zwar befindet sich die Öffnung 109 in der Seitenwand 97. Sie liegt, bezogen auf die Bewegungsrichtung des Zapfens 26, zu der Wickelwelle 18 hin versetzt.

Das Halteglied weist eine Anschlagfläche 111 auf, die dazu eingerichtet ist, mit dem Zapfen 26 in der weiter unten beschriebenen Weise zusammenzuwirken.

Mit Hilfe einer Zugfeder 112, die einenends an dem Halteglied 107 angreift und anderenends bei 113 in dem Gehäuse 45 verankert ist, wird das Halteglied 107 in die Stellung nach Fig. 18 vorgespannt, in der es mit einer Anlagefläche 114 am Grund der Kammer 106 anliegt. In dieser Stellung ist die Anlagefläche 114 aus dem Lichtraumprofil der Nut 96 zurückgezogen.

Zur Betätigung des Halteglieds 107 sowie zum zwangsweisen Verschieben des Zapfens 26 ist ein Betätigungsschieber 115 vorhanden. Der Betätigungsschieber 115 trägt auf derselben Seite zwei Fortsätze 116 und 117. Der Fortsatz 116 ragt durch die Öffnung 98 in die Nut 96, während der Fortsatz 117 durch eine Bohrung 118 in die Kammer 106 führt. An seinem innenliegenden Ende enthält der Fortsatz 117 ein Langloch 119, in dem ein Zapfen 121 gleitet, der an dem Halteglied 107 befestigt ist.

Die Funktionsweise ist wie folgt:

Wenn der Benutzer vor dem Schließen der Heckklappe 8 das Abdeckrollo 15 in die Schließstellung bringen will, zieht er die Rollobahn 17 an der ihm zugewandten Kante in Richtung auf die Hecköffnung 7. Dabei gleiten die Zapfen 26 auf den ihnen zugeordneten Schultern 95 und gelangen am Ende der Gleitbewegung in die Nuten 96 der beidseits angeordneten Sperreinrichtungen 44. Die Zugbewegung an der Rollobahn 17 wird solange fortgesetzt, bis, wie Fig. 16 zeigt, der Zapfen 26 den Rastbolzen 101 passiert hat. Der Zapfen 26 auf jeder Seite liegt damit verrastet hinter dem in das Lichtraumprofil der Nut 96 ragenden Rastnase 103 und vor dem innenliegenden Ende des Betätigungsfortsatzes 116.

Der Durchgang des Zapfens 26 in diese Stellung war möglich, weil die Feder 112 das Halteglied 111 in die Kammer 106 zurückgezogen hatte, wodurch gleichzeitig der Betätigungsschieber 115 über die Kulissenführung in Gestalt des Zapfens 121 und des Langloches 119 in Richtung auf die Hecköffnung 7 ausgetrieben war. Mit dem Verrasten des Zapfens 26 hinter dem Rastbolzen 101 ist der erste Zustand der Sperreinrichtung 44 erreicht und die Rollobahn 17 wird sicher in der Schließstellung gehalten, denn die Rückzugskraft, die an der Rollobahn 17 angreift, vermag die Rastkraft, die von dem Rastbolzen 101 aufgebracht wird, nicht zu überwinden. Wenn der Benutzer nun die Heckklappe 8 schließt, kommt ein entsprechender Abschnitt derselben an dem Betätigungsschieber 115 zur Anlage und drückt diesen nach vorne in Richtung auf den Rastbolzen 101. Dadurch wird der Zapfen 26 unter dem Rastbolzen 101 vorgedrückt in die Stellung nach Fig. 17. Diese Stellung kann er jedoch nicht verlassen, weil durch das Vorschieben des Betätigungsschiebers 115 über die kinematische Verbindung mit dem Halteglied 107 dessen Haltefläche 111 aus der Kammer 106 nach oben in den Bewegungsweg des Zapfens 26 gelangt ist.

Der Zapfen 26 kann die Anlagefläche 111 auch nicht überklettern. Daran hindert ihn die oben verlaufende Nutenwand der Nut 96. Zwar ist die Rückzugskraft bestrebt, das Halteglied 107 zurückzudrücken, doch wird dies durch die Anlage der Heckklappe an dem Schieber 115 verhindert.

Erst wenn die Heckklappe 8 erneut geöffnet wird, kann die Zugfeder 112 bzw. die gegen die Anlagefläche 111 ausgeübte Kraft das Halteglied 107 zurückdrücken und die Bewegungsbahn für den Zapfen 26 freimachen. Die Rollobahn 17 läuft dann bis in die Zwischenstellung entsprechend dem Anschlag 95a zurück.

Bei einem als Springrollo ausgeführten Abdeckrollo für den Lade- oder Kofferraum von Kombi-PKW ist eine Zwangsführungseinrichtung vorgesehen, mit der lösbar die Vorderkante der Rollobahn zu verbinden ist. Die Zwangsführungseinrichtung sorgt dafür, dass bei geöffneter Klappe die Rollobahn nach oben aufgestellt werden kann, um einen vereinfachten Zugang zu dem Laderaum zu ermöglichen, ohne dass die Notwendigkeit besteht, die Rollobahn vollständig in das Rollogehäuse zurücklaufen lassen zu müssen.

## Patentansprüche

1. Abdeckrollo (15) zum Abdecken des Laderaums (2) von Personenkraftfahrzeugen, der eine nach oben zeigende Laderaumöffnung aufweist, die nach hinten von einer Heckklappe (8) begrenzt ist, die an einer Fahrzeugkarosserie anscharniert und bezüglich einer horizontalen Achse schwenkbar ist,
mit einem länglichen Gehäuse (16), das in dem Laderaum (2) befestigt ist und einen Auslaufschlitz (23) aufweist,
mit einer in dem Gehäuse (16) drehbar gelagerten Wickelwelle (18),
mit einer Rollobahn (17), die mit einer Kante an der Wickelwelle (18) befestigt ist, die durch den Auslaufschlitz (23) aus dem Gehäuse (16) ausziehbar ist, die mit einer anderen zu der Wickelwelle (18) parallelen Kante an einem Zugstab (25) befestig ist und die zwischen einer Schließstellung und einer Offenstellung hin- und herbewegbar ist, wobei sie in der Schließstellung im wesentlichen horizontal verlaufend die Laderaumöffnung bis zu der Heckklappe (8) zumindest weitgehend überdeckt und in der Offenstellung die Laderaumöffnung im wesentlichen freigibt,
mit einer Antriebseinrichtung (19), durch die die damit gekuppelte Wickelwelle (18) ständig im Sinne des Aufwickelns der Rollobahn (17) auf die Wickelwelle 18) vorgespannt ist, und
mit einer Zwangsführungseinrichtung (27), die zur lösbaren Verbindung mit dem Zugstab (25) eingerichtet ist und die zwei Endlagen für den Zugstab (25) aufweist, von denen die eine der Schließstellung der Rollobahn (17) und von denen die andere einer Zwischenstellung der Rollobahn (17) entspricht, wobei sich der Zugstab (25) sowohl in der Schließstellung als auch in der Zwischenstellung, in der die Laderaumöffnung nurmehr unvollständig abgedeckt ist, innerhalb der Fahrzeugkarosserie befindet, wobei die Zwangsführungseinrichtung (27) derart gestaltet ist, dass durch sie die Rollobahn (17) selbsttätig in die Zwischenstellung überführbar ist.

2. Abdeckrollo nach Anspruch 1, **dadurch gekennzeichnet, dass** sich in der Zwischenstellung der Zugstab (25) in einer Position befindet, die höher liegt als es seiner Position entspricht, die zu der Schließstellung gehört.

3. Abdeckrollo nach Anspruch 1, **dadurch gekennzeichnet, dass** sich in der Zwischenstellung der Zugstab (25) in einer Position befindet, die nicht höher liegt als es seiner Position entspricht, die zu der Schließstellung gehört, die jedoch näher an dem Gehäuse (16) liegt.

4. Abdeckrollo nach Anspruch 1, **dadurch gekennzeichnet, dass** die Zwangsführungseinrichtung (27) derart gestaltet ist, dass der Zugstab (25) in der Zwischenstellung, in der die Laderaumöffnung nurmehr unvollständig abgedeckt ist, von dem Gehäuse (16) nicht weiter entfernt ist als in der Schließstellung.

5. Abdeckrollo nach Anspruch 1, **dadurch gekennzeichnet, dass** die Zwangsführungseinrichtung (27) den Zugstab (25) auch in der Position hält, in der die Rollobahn (17) die Laderaumöffnung (2) abdeckt.

6. Abdeckrollo nach Anspruch 1, **dadurch gekennzeichnet, dass** Koppelglieder (37,61,86,95,115) vorgesehen sind, um die Bewegung der Heckklappe (8) mit der Bewegung der Zugstange (25) zumindest über einen Teil ihrer Bewegungsbahn zwischen der Schließstellung und der Zwischenstellung zu koppeln.

7. Abdeckrollo nach Anspruch 6, **dadurch gekennzeichnet, dass** die Koppelglieder (37) drucksteif ausgeführt sind.

8. Abdeckrollo nach Anspruch 6, **dadurch gekennzeichnet, dass** die Koppelglieder (37) biegeelastisch sind.

9. Abdeckrollo nach Anspruch 6, **dadurch gekennzeichnet, dass** die Koppelglieder (37) zugelastisch sind.

10. Abdeckrollo nach Anspruch 1, **dadurch gekennzeichnet, dass** die Zwangsführungseinrichtung (27) zwei in dem Laderaum (2) schwenkbar angebrachte einarmige Hebel (28) aufweist, von denen sich jeder auf einer Seite der ausgezogenen Rollobahn (17) befindet und die beide um zueinander koaxiale Achsen (29) schwenkbar sind, die zu der Wickelwelle (18) parallel sind.

11. Abdeckrollo nach Anspruch 10, **dadurch gekennzeichnet, dass** die Hebel (28) an ihren freien Enden Aufnahmeeinrichtungen (31) tragen, die zur Aufnahme von Abschnitten (26) des Zugstabs (25) eingerichtet sind.

12. Abdeckrollo nach Anspruch 1, **dadurch gekennzeichnet, dass** die Zwangsführungseinrichtung (27) seitlich neben der Hecköffnung (7) verlaufende Führungsnuten (35,43) aufweist, die in der Karosserie befestigt sind.

13. Abdeckrollo nach Anspruch 12, **dadurch gekennzeichnet, dass** in den Führungsnuten (35,43) die Enden (26) der Zugstange (25) längsverschieblich geführt sind.

14. Abdeckrollo nach Anspruch 12, **dadurch gekennzeichnet, dass** in den Führungsnuten (35) Schlitten (36) längsverschieblich geführt sind.

15. Abdeckrollo nach Anspruch 14, **dadurch gekennzeichnet, dass** die Schlitten (36) Aufnahmeeinrichtungen (31) tragen, die zur Aufnahme von Enden (26) des Zugstabs (25) eingerichtet sind.

16. Abdeckrollo nach Anspruch 10 oder 14, **dadurch gekennzeichnet, dass** für jeden Schlitten (36) oder jeden Hebel (28) ein Koppelglied (37) vorgesehen ist, das den Schlitten (36) oder den Hebel (28) kinematisch mit der Heckklappe (8) verbindet.

17. Abdeckrollo nach Anspruch 11, **dadurch gekennzeichnet, dass** den Hebeln (28) Federn zugeordnet sind, die die Hebel (28) zumindest ein Stück weit in Richtung auf eine Position vorspannen, die der Zwischenstellung der Rollobahn entspricht.

18. Abdeckrollo nach Anspruch 14, **dadurch gekennzeichnet, dass** den Schlitten (36) Federn zugeordnet sind, die die Schlitten (36) in eine Position entsprechend dem geschlossenen Laderaum (15) oder in eine Position entsprechend dem zugänglichen Laderaum (2) vorspannen.

19. Abdeckrollo nach Anspruch 1, **dadurch gekennzeichnet, dass** Anschläge (32) vorgesehen sind, durch die bei geschlossener Heckklappe (8) die untere Lage des Zugstabs (25) definiert ist.

20. Abdeckrollo nach Anspruch 1, **dadurch gekennzeichnet, dass** der Zwangsführungseinrichtung (27) eine Sperreinrichtung (44) zugeordnet ist, die drei Zustände aufweist, wobei in dem ersten Zustand eine Bewegung der Zugstange (25) aus einer Schließstellung heraus gesperrt ist, in dem zweiten Zustand die Bewegung der Zugstange (25) aus der Schließstellung in die Zwischenstellung freigegeben ist und in dem dritten Zustand die Zugstange (25), abhängig von der Stellung der Heckklappe (8), in der Schließstellung gehalten ist.

21. Abdeckrollo nach Anspruch 20, **dadurch gekennzeichnet, dass** dem ersten Zustand der Sperreinrichtung (44) eine erste Position der Zugstange (25) und dem dritten Zustand eine zweite Position entspricht, die von der ersten Position weniger als 2 cm entfernt ist und somit auch einer Schließstellung der Rollobahn (17) entspricht.

22. Abdeckrollo nach Anspruch 20, **dadurch gekennzeichnet, dass** die Sperreinrichtung (44) mit der Zugstange (25) unmittelbar zusammenwirkt.

23. Abdeckrollo nach Anspruch 20, **dadurch gekennzeichnet, dass** die Sperreinrichtung (44) eine Nut (43) aufweist, in der das betreffende Ende (26) der Zugstange (25) zwangsgeführt ist und die einen Rücksprung (46) aufweist, derart, dass die von der Wickelwelle (18) ausgeübte Zugkraft ein Selbsthalten des Endes (26) der Zugstange (25) in dem Rücksprung (46) bewirkt, wobei diese Position der Zugstange (25) in dem Rücksprung (46) dem ersten Zustand der Sperreinrichtung (44) entspricht.

24. Abdeckrollo nach Anspruch 23, **dadurch gekennzeichnet, dass** zumindest ein Teil einer Wand (56) des Rücksprungs (46) beweglich ist und dass die bewegliche Wand (56) über ein Koppelglied (61) mit der Heckklappe (8) gekoppelt ist, derart, dass die Heckklappe (8) die Bewegung der beweglichen Wand (56) steuert.

25. Abdeckrollo nach Anspruch 20, **dadurch gekennzeichnet, dass** die Sperreinrichtung (44) ein Aushebeglied (54,68) enthält, um die Zugstange (25) aus einer Position entsprechend dem ersten Zustand der Sperreinrichtung (44) in eine Position entsprechend dem dritten Zustand der Sperreinrichtung (44) zu überführen.

26. Abdeckrollo nach Anspruch 25, **dadurch gekennzeichnet, dass** die Bewegung des Aushebeglieds (54,68) durch die Heckklappe (8) gesteuert ist.

27. Abdeckrollo nach Anspruch 20, **dadurch gekennzeichnet, dass** die Sperreinrichtung (44) ein zwischen zwei Stellungen hin- und herbewegbares Sperrglied (61,69,76,107) enthält, das in einer Stellung die Zugstange (25) in der dem dritten Zustand entsprechenden Position hält und das in der anderen Stellung die Bewegung der Zugstange (25) freigegeben ist.

28. Abdeckrollo nach Anspruch 27, **dadurch gekennzeichnet, dass** das Sperrglied (76) über einen Bowdenzug (92) mit der Heckklappe (8) gekoppelt ist.

29. Abdeckrollo nach den Ansprüchen 25 oder 27, **dadurch gekennzeichnet, dass** das Aushebeglied (68) und/oder das Sperrglied (69) unmittelbar an der Heckklappe (8) befestigt ist.

30. Abdeckrollo nach den Ansprüchen 25 oder 27, **dadurch gekennzeichnet, dass** das Aushebeglied (73,116) und/oder das Sperrglied (61,76) ein von der Heckklappe (8) zu steuernder Schieber ist.

31. Abdeckrollo nach Anspruch 20, **dadurch gekennzeichnet, dass** die Sperreinrichtung (44) eine Rasteinrichtung (66, 78,101) aufweist, zu der ein in das Lichtraumprofil der Führungsnut (43,96) ragendes Rastglied (66,78,101) gehört, um die Zugstange (25) in einer Position entsprechend dem ersten Zustand der Sperreinrichtung (44) zu halten.

## Claims

1. Easy-to-use roller blind (15) for covering the luggage compartment (2) of a passenger vehicle with a luggage-compartment opening which is open to the top and limited at the rear by a tailgate (8) hinged to the vehicle body work and rotatable about a horizontal axis,
with a longitudinal housing (16) secured within the luggage compartment (2) and providing an outlet slot (23),
with a rotatable winding shaft (18) mounted in the housing (16),
with a roller-blind web (17), which is attached at one edge to the winding shaft (18), which can be withdrawn from the housing (16) through the outlet slit (23), which is attached to a draw bar (25) by another edge parallel to the winding shaft (18), and which can be moved backwards and forwards between a closed position and an open position, wherein, in the closed position, it covers the luggage compartment opening at least to a considerable extent, running horizontally up to the tailgate (8), and in the open position, leaves the opening of the luggage compartment substantially open,
with a drive device (19), by means of which the winding shaft (18) coupled to it is constantly prestressed on the winding shaft (18) in the winding-on direction of the roller-blind web (17), and
with a positive guiding device (27), which is arranged for detachable connection to the draw bar (25) and which provides two end positions for the draw bar (25), one of which corresponds to the closed position of the roller-blind web (17) and the other corresponds to an intermediate position of the roller-blind web (17), wherein, both in the closed position and also in the intermediate position, in which the luggage-compartment opening is only partially covered, the draw bar (25) is disposed inside the vehicle body work, and wherein the positive guiding device (27) is designed so that it automatically moves the roller-blind web (17) into the intermediate position.

2. Easy-to-use roller blind according to claim 1, **characterised in that**, in the intermediate position, the draw bar (25) is disposed in a position, which is located higher than its position corresponding to the closed position.

3. Easy-to-use roller blind according to claim 1, **characterised in that**, in the intermediate position, the draw bar (25) is disposed in a position, which is not located higher than its position corresponding to the closed position, but which is closer to the housing (16).

4. Easy-to-use roller blind according to claim 1, , **characterised in that** the positive guiding device (27) is designed in such a manner that, in the intermediate position in which the luggage-compartment opening is only partially covered, the draw bar (25) is not further removed from the housing (16) than in the closed position.

5. Easy-to-use roller blind according to claim 1, **characterised in that** the positive guiding device (27) also holds the draw bar (25) in the position, in which the roller-blind web (17) covers the luggage-compartment opening.

6. Easy-to-use roller blind according to claim 1, **characterised in that** coupling elements (37, 61, 86, 95, 115) are provided in order to couple the movement of the tailgate (8) with the movement of the draw bar (25) at least over a part of the pathway of its movement between the closed position and the intermediate position.

7. Easy-to-use roller blind according to claim 6, **characterised in that** the coupling elements (37) are designed to provide compressive rigidity.

8. Easy-to-use roller blind according to claim 6, **characterised in that** the coupling elements (37) are designed to provide bending resilience.

9. Easy-to-use roller blind according to claim 6, **characterised in that** the coupling elements (37) are designed to provide tensile resilience.

10. Easy-to-use roller blind according to claim 1, **characterised in that** the positive guiding device (27) provides two single-arm levers (28) mounted in a rotatable manner in the luggage compartment (2), each of which is disposed on one side of the extended roller-blind web (17) and both of which can be rotated about mutually coaxial axes (29), which are parallel to the winding shaft (18).

11. Easy-to-use roller blind according to claim 10, **characterised in that** the levers (28) provide retaining devices (31) at their free ends, which are designed to retain portions (26) of the draw bar (25).

12. Easy-to-use roller blind according to claim 1, **characterised in that** the positive guiding device (27) provides lateral guiding grooves (35, 43) running alongside the tailgate opening (7), which are attached within the vehicle body work.

13. Easy-to-use roller blind according to claim 12, **characterised in that** the ends (26) of the draw bar (25) are guided within the guiding grooves (35, 43) in a longitudinally displaceable manner.

14. Easy-to-use roller blind according to claim 12, **characterised in that** runners (36) are guided within the guiding grooves (35) in a longitudinally displaceable manner.

15. Easy-to-use roller blind according to claim 14, **characterised in that** the runners (36) provide retaining devices (31), which are arranged in order to retain ends (26) of the draw bar (25).

16. Easy-to-use roller blind according to claim 10 or 14, **characterised in that** a coupling element (37) is provided for each runner (36) or for each lever (28), which connects the runner (36) or the lever (28) to the tailgate (8) in a kinematic manner.

17. Easy-to-use roller blind according to claim 11, **characterised in that** springs are allocated to the levers (28), which pre-stress the levers (28), at least over a partial distance, towards a position corresponding to the intermediate position of the roller-blind web.

18. Easy-to-use roller blind according to claim 14, **characterised in that** springs are allocated to the runners (36), which pre-stress the runners (36) in a position corresponding to a closed luggage compartment (15) or a position corresponding to an accessible luggage compartment (2).

19. Easy-to-use roller blind according to claim 1, **characterised in that** stops (32) are provided, which define the lower position of the draw bar (25) when the tailgate (8) is closed.

20. Easy-to-use roller blind according to claim 1, **characterised in that** a locking device (44) is allocated to the positive guiding device (27), which provides three conditions, wherein, in the first condition, any movement of the draw bar (25) out of the closed position is blocked; wherein, in the second condition, a movement of the draw bar (25) out of the closed position into the intermediate position is permitted; and wherein, in the third condition, the draw bar (25) is held in the closed position, depending on the position of the tailgate (8).

21. Easy-to-use roller blind according to claim 20, **characterised in that** a first position of the draw bar (25) corresponds to the first condition of the locking device (44), and a second position of the draw bar, which is less than 2 cm removed from the first position, corresponds to the third condition of the locking device, and accordingly, also corresponds to a closed position of the roller-blind web (17).

22. Easy-to-use roller blind according to claim 20, **characterised in that** the locking device (44) cooperates directly with the draw bar (25).

23. Easy-to-use roller blind according to claim 20, **characterised in that** the locking device (44) provides a groove (43), in which the relevant end (26) of the draw bar (25) is positively guided, and which groove provides a flange recess (46) in such a manner that the tensile force exerted by the winding shaft (18) achieves a self-locking of the end (26) of the draw bar (25) in the flange recess (46), wherein this position of the draw bar (25) in the flange recess (46) corresponds to the first condition of the locking device (44).

24. Easy-to-use roller blind according to claim 23, **characterised in that** at least a portion of a wall (56) of the flange recess (46) is mobile and that the mobile wall (56) is coupled via a coupling element (61) to the tailgate (8), in such a manner that the tailgate (8) controls the movement of the mobile wall (56).

25. Easy-to-use roller blind according to claim 20, **characterised in that** the locking device (44) contains a lifting element (54, 68), in order to move the draw bar (25) from a first position corresponding to the first condition of the locking device (44) into a position corresponding to the third condition of blocking device (44).

26. Easy-to-use roller blind according to claim 25, **characterised in that** the movement of the lifting element (54, 68) is controlled by the tailgate (8).

27. Easy-to-use roller blind according to claim 20, **characterised in that** the locking device (44) contains a locking element (61, 69, 76, 107) which can be moved backwards and forwards between two positions, and which, in one position, holds the draw bar (25) in the position corresponding to the third condition, and, in the other position, permits the movement of the draw bar (25).

28. Easy-to-use roller blind according to claim 27, **characterised in that** the locking element (76) is coupled to the tailgate (8) via a Bowden wire (92).

29. Easy-to-use roller blind according to claims 25 or 27, **characterised in that** the lifting element (68) and/or the locking element (69) is attached directly to the tailgate (8).

30. Easy-to-use roller blind according to claims 25 or 27, **characterised in that** the lifting element (73, 116) and/or the locking element (61, 76) is a slide controlled by the tailgate (8).

31. Easy-to-use roller blind according to claim 20, **characterised in that** the locking device (44) provides a ratchet device (66, 78, 101), which provides a ratchet element (66, 78, 101) projecting into the clearance profile of the guiding groove (43, 96), in order to hold the draw bar (25) in a position corresponding to the first condition of the locking device (44).

## Revendications

1. Volet roulant cache-bagages (15) pour couvrir le coffre (2) de voitures particulières pourvu d'une ouverture de coffre dirigée vers le haut, qui est limitée vers l'arrière par un hayon arrière (8) lié par charnières à une carrosserie de véhicule et pivotant autour d'un axe horizontal, avec un boîtier (16) allongé, qui est fixé dans le coffre (2) et présente une fente de sortie (23),
avec un axe d'enroulement (18) qui est monté tournant dans le boîtier (16), avec une bande de volet roulant (17), qui est fixée par un bord à l'axe d'enroulement (18), peut être tirée hors du boîtier (16) à travers la fente de sortie (23), est fixée à une barre de traction (25) par un autre bord parallèle à l'axe d'enroulement (18) et peut être déplacée suivant un mouvement de va-et-vient entre une position ouverte et une position fermée, la bande de volet roulant, dans la position fermée, couvrant au moins en grande partie l'ouverture de coffre à bagages jusqu'au hayon arrière (8) en s'étendant essentiellement horizontalement, et dans la position ouverte libérant essentiellement l'ouverture de coffre à bagages,
avec un dispositif d'entraînement (19) par lequel l'axe d'enroulement (18) couplé à celui-ci est précontraint de manière permanente dans le sens de. l'enroulement de la bande de volet roulant (17) sur l'axe d'enroulement (18), et
avec un dispositif de guidage forcé (27) qui est agencé à des fins de liaison démontable avec la barre de traction (25) et présente deux positions terminales pour la barre de traction (25), dont l'une correspond à la position fermée de la bande de volet roulant (17) et l'autre à une position intermédiaire de la bande de volet roulant (17), la barre de traction (25), dans la position fermée aussi bien que dans la position intermédiaire, dans laquelle l'ouverture de coffre à bagages n'est que partiellement couverte, se trouvant à l'intérieur de la carrosserie de véhicule, le dispositif de guidage forcé (27) étant agencé de telle sorte que la bande de volet roulant (17) puisse être amenée automatiquement dans la position intermédiaire

2. Volet roulant cache-bagages selon la revendication 1, **caractérisé en ce que** la barre de traction (25), dans la position intermédiaire, occupe une position qui est située plus haut celle correspondant à la position fermée.

3. Volet roulant cache-bagages selon la revendication 1, **caractérisé en ce que**, dans la position intermédiaire, la barre de traction (25) occupe une position qui n'est pas plus élevée que celle correspondant à la position ouverte mais est cependant plus proche du boîtier (16).

4. Volet roulant cache-bagages selon la revendication 1, **caractérisé en ce que** le dispositif de guidage forcé (27) est agencé de telle sorte que la barre de traction (25), dans la positon intermédiaire, dans laquelle l'ouverture de coffre à bagages n'est que partiellement couverte, ne soit pas plus éloignée du boîtier (16) que dans la position fermée.

5. Volet roulant cache-bagages selon la revendication 1, **caractérisé en ce que** le dispositif de guidage forcé (27) retient également la barre de traction (25), dans la position dans laquelle la bande de volet roulant (17) couvre l'ouverture de coffre à bagages (2).

6. Volet roulant cache-bagages selon la revendication 1, **caractérisé en ce qu'**il est prévu des moyens de couplage (37, 61, 86, 95, 115) pour coupler le mouvement du hayon arrière (8) au mouvement de la barre de traction (25), au moins sur une partie de sa trajectoire de déplacement entre la position fermée et la position intermédiaire.

7. Volet roulant cache-bagages selon la revendication 6, **caractérisé en ce que** les éléments de couplage (37) sont rigides en compression.

8. Volet roulant cache-bagages selon la revendication 6, **caractérisé en ce que** les éléments de couplage (37) sont élastiques en flexion.

9. Volet roulant cache-bagages selon la revendication 6, **caractérisé en ce que** les éléments de couplage (37) sont élastiques en traction.

10. Volet roulant cache-bagages selon la revendication 1, **caractérisé en ce que** le dispositif de guidage forcé (27) comporte deux leviers (28) monobras montés pivotants à l'intérieur du coffre à bagages (2), qui sont disposés chacun d'un côté de la bande de volet roulant (17) et pivotent autour d'axes (29) mutuellement coaxiaux, parallèles à l'axe d'enroulement (18).

11. Volet roulant cache-bagages selon la revendication 10, **caractérisé en ce que** les leviers (28), à leur extrémité libre, portent des dispositifs de réception (31) agencés pour recevoir des parties (26) de la barre de tirage (25).

12. Volet roulant cache-bagages selon la revendication 1, **caractérisé en ce que** le dispositif de guidage forcé (27) comporte des rainures de guidage (35, 43) qui s'étendent latéralement près de la baie de hayon (7) et sont fixées à la carrosserie.

13. Volet roulant cache-bagages selon la revendication 12, **caractérisé en ce que** les extrémités (26) de la barre de traction (25) sont guidées avec possibilité de coulissement dans la direction longitudinale dans les rainures de guidage (35, 43).

14. Volet roulant cache-bagages selon la revendication 12, **caractérisé en ce que** des chariots (36) sont guidés avec possibilité de coulissement dans la direction longitudinale dans les rainures de guidage (35).

15. Volet roulant cache-bagages selon la revendication 14, **caractérisé en ce que** les chariots (36) portent des dispositifs de réception (31) agencés pour recevoir les extrémités (26) de la barre de tirage (25).

16. Volet roulant cache-bagages selon la revendication 10 ou 14, **caractérisé en ce qu'**il est prévu pour chaque chariot (36) ou chaque levier (28) un organe de couplage (37), qui couple le chariot (36) ou le levier (28) au hayon arrière (8) sur le plan cinématique.

17. Volet roulant cache-bagages selon la revendication 11, **caractérisé en ce qu'**aux leviers (28) sont associés des ressorts qui précontraignent les leviers (28) sur une partie de trajet en direction d'un point qui correspond à la position intermédiaire de la bande de volet roulant.

18. Volet roulant cache-bagages selon la revendication 14, **caractérisé en ce qu'**aux chariots (36) sont associés des ressorts qui précontraignent les chariots (36) dans une position correspondant à la fermeture du coffre à bagages (15) ou dans une position correspondant à l'accès au coffre à bagages (2).

19. Volet roulant cache-bagages selon la revendication 1, **caractérisé en ce qu'**il est prévu des butées (32), qui fixent la position inférieure de la barre de traction (25) lorsque le hayon arrière (8) est fermé.

20. Volet roulant cache-bagages selon la revendication 1, **caractérisé en ce qu'**au dispositif de guidage forcé (27) est associé un dispositif de verrouillage (44) à trois états, dans un état, un déplacement de la barre de traction (25) hors d'une position fermée étant interdit, dans le deuxième état, le déplacement de la barre de traction (25) de la position fermée vers la position intermédiaire étant autorisé, et dans le troisième état, la barre de traction (25) étant tenue dans la position fermée en fonction de la position du hayon arrière (8).

21. Volet roulant cache-bagages selon la revendication 20, **caractérisé en ce qu'**au premier état du dispositif de verrouillage (44) correspond une première position de la barre de traction (25) et au troisième état correspond une deuxième position, qui est distante de moins de 2 cm de la première position et correspond ainsi également à une position fermée de la bande de volet roulant (17).

22. Volet roulant cache-bagages selon la revendication 20, **caractérisé en ce que** le dispositif de verrouillage (44) coopère directement avec la barre de traction (25).

23. Volet roulant cache-bagages selon la revendication 20, **caractérisé en ce que** le dispositif de verrouillage (44) comporte une rainure (43), dans laquelle l'extrémité (26) concernée de la barre de traction (25) est guidée, et qui présente un épaulement (46) tel, que la force de traction exercée par l'axe d'enroulement (18) provoque un auto-blocage de l'extrémité (26) de la barre de fraction (25) derrière l'épaulement (46), cette position de la barre de traction (25) derrière l'épaulement (46) correspondant au premier état du dispositif de blocage (44).

24. Volet roulant cache-bagages selon la revendication 23, **caractérisé en ce qu'**au moins une partie d'une paroi (56) de l'épaulement (46) est mobile et **en ce que** la paroi mobile (56) est couplée au hayon arrière (8) par l'intermédiaire d'un organe de couplage (61) de manière telle que le hayon arrière (8) commande le déplacement de la paroi mobile (56).

25. Volet roulant cache-bagages selon la revendication 20, **caractérisé en ce que** le dispositif de verrouillage (44) contient un organe de tirage (54, 68) pour amener la barre de traction (25) d'une position qui correspond au premier état du dispositif de verrouillage (44) dans une position qui correspond au troisième état dudit dispositif de verrouillage (44).

26. Volet roulant cache-bagages selon la revendication 25, **caractérisé en ce que** le mouvement de l'organe de tirage (54, 68) est commandé par le hayon arrière (8).

27. Volet roulant cache-bagages selon la revendication 20, **caractérisé en ce que** le dispositif de verrouillage (44) comprend un organe de verrouillage (61,69, 76, 107) mobile entre deux positions, lequel organe de verrouillage, dans une position, maintient la barre de traction dans la position correspondant au troisième état et, dans l'autre position, autorise le déplacement de la barre de traction (25).

28. Volet roulant cache-bagages selon la revendication 27, **caractérisé en ce que** l'organe de verrouillage (76) est couplé au hayon arrière (8) par l'intermédiaire d'un câble de Bowden (92).

29. Volet roulant cache-bagages selon revendications 25 ou 27, **caractérisé en ce que** l'organe de tirage (68) et/ou l'organe de verrouillage (69) est fixé directement sur le hayon arrière (8).

30. Volet roulant cache-bagages selon revendications 25 ou 27, **caractérisé en ce que** l'organe de tirage (73, 116) et/ou l'organe de verrouillage (61, 76) est un coulisseau commandé par le hayon arrière (8).

31. Volet roulant cache-bagages selon la revendication 20, **caractérisé en ce que** le dispositif de verrouillage (44) comporte un dispositif d'encliquetage (66, 78, 101) qui comprend un organe d'encliquetage de tirage (66, 78, 101) qui s'engage dans l'ouverture de la rainure de guidage (43, 96) pour maintenir la tige de traction (25) dans une position correspondant au premier état du dispositif de verrouillage (44).
